(19)

Europäisches
Patentamt
European
Patent Office
Office européen
des brevets

(11) **EP 4 530 256 A1**

(12) **EUROPEAN PATENT APPLICATION**
published in accordance with Art. 153(4) EPC

(43) Date of publication:
**02.04.2025 Bulletin 2025/14**

(21) Application number: **23829429.2**

(22) Date of filing: **23.02.2023**

(51) International Patent Classification (IPC):
$C01G\ 53/00^{(2025.01)}$    $H01M\ 4/525^{(2010.01)}$
$H01M\ 4/505^{(2010.01)}$    $H01M\ 4/04^{(2006.01)}$
$B82Y\ 30/00^{(2011.01)}$    $B82Y\ 40/00^{(2011.01)}$
$H01M\ 10/0525^{(2010.01)}$    $H01M\ 4/62^{(2006.01)}$

(52) Cooperative Patent Classification (CPC):
Y02E 60/10

(86) International application number:
**PCT/CN2023/077787**

(87) International publication number:
**WO 2024/001236 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022 CN 202210759671**

(71) Applicant: **Ningbo Ronbay New Energy
Technology Co., Ltd.
Yuyao Ningbo, Zhejiang 315402 (CN)**

(72) Inventors:
 • **DONG, Liangchen**
 **Ningbo, Zhejiang 315402 (CN)**
 • **LIU, Yongpeng**
 **Ningbo, Zhejiang 315402 (CN)**
 • **ZHANG, Wenxu**
 **Ningbo, Zhejiang 315402 (CN)**
 • **WANG, Xueying**
 **Ningbo, Zhejiang 315402 (CN)**

 • **YANG, Lingwei**
 **Ningbo, Zhejiang 315402 (CN)**
 • **LV, Mengyao**
 **Ningbo, Zhejiang 315402 (CN)**
 • **CHEN, Yu**
 **Ningbo, Zhejiang 315402 (CN)**
 • **YAN, Xufeng**
 **Ningbo, Zhejiang 315402 (CN)**
 • **LIU, Rui**
 **Ningbo, Zhejiang 315402 (CN)**
 • **LEE, Jonghee**
 **Ningbo, Zhejiang 315402 (CN)**
 • **WANG, Zunzhi**
 **Ningbo, Zhejiang 315402 (CN)**
 • **YUAN, Xujun**
 **Ningbo, Zhejiang 315402 (CN)**
 • **SUN, Hui**
 **Ningbo, Zhejiang 315402 (CN)**
 • **YOU, Sangyul**
 **Ningbo, Zhejiang 315402 (CN)**

(74) Representative: **Bandpay & Greuter
11, rue Christophe Colomb
75008 Paris (FR)**

(54) **MANGANESE-BASED CARBONATE PRECURSOR, LITHIUM-RICH MANGANESE-BASED
POSITIVE ELECTRODE MATERIAL AND LITHIUM-ION SECONDARY BATTERY**

(57)    Provided in the present invention is a manganese-based carbonate precursor of a positive electrode material for a secondary battery. **In** the manganese-based carbonate precursor that has a specific structure and composition and contains a trace amount of uniformly distributed Na element, a content of Na is in a range of 0.5-3 mol%, which range can ensure that the structural integrity and consistency of carbonate crystals are not affected. **In** addition, the trace amount of Na element is uniformly distributed inside the manganese-based carbonate precursor provided in the present invention, and by means of simple mixing with a lithium source and sintering, a lithium-rich manganese-based material uniformly doped with Na element can be directly obtained without the need for introducing other Na source, whereby uneven doping of Na is effectively avoided, the doping effect is improved, and the electrical properties of the material are significantly improved, without a significant increase in the production cost at the same time. The precursor has a high primary particle crystallinity degree, and a good crystal structure. The lithium-rich manganese-based positive electrode mate-

Processed by Luminess, 75001 PARIS (FR)

**(Cont. next page)**

rial containing a trace amount of Na element provided in the present invention effectively improves the initial charging-discharging coulombic efficiency, the first-cycle discharge capacity, an average voltage, and the energy efficiency.

## Description

The present application claims priority to Chinese Patent Application with application No. 202210759671.0, filed on June 30, 2022 with China National Intellectual Property Administration and entitled "Manganese-Based Carbonate Precursor, Lithium-Rich Manganese-Based Positive Electrode Material and Lithium-Ion Secondary Battery", which is hereby incorporated by reference in its entirety.

## TECHNICAL FIELD

The present invention belongs to a technical field of lithium-rich manganese-based positive electrode materials, and relates to a manganese-based carbonate precursor of a positive electrode material for a secondary battery and a preparation method thereof, a lithium-rich manganese-based positive electrode material and a preparation method thereof, and a lithium-ion secondary battery, in particular to a manganese-based carbonate precursor containing a trace amount of Na element, a lithium-rich manganese-based positive electrode material and a lithium-ion secondary battery.

## BACKGROUND

Short endurance mileage and high cost are two major problems that must be solved to further increase a penetration rate of electric vehicles. Cost of s battery cell accounts for more than 30% of a total cost of an electric vehicle. Therefore, it is of great significance to improve an energy density and reduce a cost of power lithium-ion batteries. Lithium-rich manganese-based positive electrode material is a new type of high-energy-density and low-cost positive electrode material. However, in order for the lithium-rich manganese-based positive electrode material to exert a high specific capacity (> 230 mAhg$^{-1}$), its operating voltage window should be no less than 4.5V vs Li/Li$^+$ to activate lithium-rich phase Li$_2$MnO$_3$. However, this high voltage window will lead to a decreased structural stability of the material, which is manifested as increased capacity attenuation and average discharge voltage attenuation, which is difficult to meet a cycle life standard in commercial scenarios, restricting the lithium-rich manganese-based positive electrode material's use as an industrialized positive electrode material for power lithium-ion battery. Therefore, improving the initial efficiency and the cycling stability of the lithium-rich manganese-based positive electrode material will accelerate an industrialization process of the material, thereby reducing the total cost of electric vehicles and improving the endurance mileage thereof at the same time.

Commonly used technical means of improving performance of the lithium-rich positive electrode material include bulk phase/surface element doping, surface coating, surface structure reconstruction and so on. For example, CN113540458 discloses a Na-doped lithium-rich positive electrode material prepared by a sol-gel method, where a molar content of Na ion is 0.84%-8.7% of a molar content of Li ion, and a capacity retention rate reaches 86% after 100 cycles at 0.5C; CN113782748 discloses a surface coated cobalt-free lithium-rich positive electrode material with an inner core doped with Na/K metal ion, and the material has improved initial efficiency and cycling stability, where a cobalt-free precursor and a lithium source are mixed and pre-sintered to obtain a pre-sintered material; the pre-sintered material and a metal salt are mixed and calcined to obtain a cobalt-free lithium-rich positive electrode particle; the cobalt-free lithium-rich positive electrode particle is mixed with and coated with an organic lithium salt (sodium dihydrogen phosphate, sodium titanate or sodium alginate) and is roasted, and then is subjected to wet coating, to obtain a modified cobalt-free lithium-rich positive electrode material, and the obtained material has improved capacity and voltage stability to a certain degree. In English articles ACS Appl.Mater.Interfaces 2019,11,37842-37849, J. Mater.Chem.A,2013,1,11397-11403, ACS Appl.Energy Mater.2020,3,9,8953-8959, Electrochimica Acta 253(2017)31-38, RSC Adv.,2015,5,93048-93056, Int J Energy Res.2019;2-11., ChemElectroChem 10.1002/celc.201901846, Electrochimica Acta 349(2020)136402 and ACS Appl.Energy Mater.2018,1,4065-4074, etc., sodium carbonate or sodium hydroxide is used as a sodium source to mix with lithium carbonate and a transition metal precursor, and to undergo solid-state sintering, to obtain a Na-doped lithium-rich positive electrode material, and this method improves electrochemical performance of the lithium-rich positive electrode material to varying degrees; in articles RSC Adv.,2016,6,57310, Nano Energy 81(2021)105622, Journal of Alloys and Compounds 895 (2022) 162613, ACS Sustainable Chem. Eng.2021, 9, 197-206, Nanotechnology 33 (2022) 065705, J. Mater. Chem. A, 2016, DOI: 10.1039/C5TA07764h, etc., other methods such as spray pyrolysis, sol-gel, hydrothermal method, etc. are used to introduce sodium ions for doping, so as to improve the capacity performance and the cycling stability of a lithium-rich positive electrode material. However, the foregoing modification methods either have a low possibility of industrialization, or after the precursor has been synthesized, use an independent sodium-containing compound as a sodium source to introduce a sodium ion for doping, which increases the process complexity and has a long production cycle, leading to an increase in production cost.

Therefore, it is necessary and urgent to design an industrialized modification method of a lithium-rich material that can significantly improve the initial coulombic efficiency and cycling stability of the lithium-rich manganese-based positive electrode material without significantly increasing the cost. This is also one of the urgent problems to be solved by many frontline researchers in the industry.

## SUMMARY

In view of this, a technical problem to be solved by the present invention is to provide a manganese-based carbonate precursor of a positive electrode material for a secondary battery and a preparation method thereof, a lithium-rich manganese-based positive electrode material and a preparation method thereof, and a lithium-ion secondary battery, in particular to a positive electrode material prepared by a manganese-based carbonate precursor containing a trace amount of Na element. The lithium-rich manganese-based positive electrode material provided in the present invention can effectively improve the initial coulombic efficiency, capacity, average discharge voltage, and cycling stability. Moreover, the material is simple in process and has mild and easy-to-control preparation conditions, which is more conducive to the promotion and application of industrialized production.

The present invention provides a manganese-based carbonate precursor of a positive electrode material for a secondary battery, and the manganese-based carbonate precursor has a chemical formula $Ni_xCo_yNa_zMn_{1-x-y-z}CO_3$; where, $0.25 \leq x \leq 0.35$, $0 \leq y \leq 0.1$, $0.25 \leq x+y \leq 0.4$, and $0.005 \leq z \leq 0.03$.

Preferably, the manganese-based carbonate precursor is a secondary spherical precursor formed by aggregation of primary particles;

a shape of the primary particle includes a spherical shape and/or an irregular shape;
an average particle diameter of the primary particle is 50-100 nm;
D50 particle diameter of the manganese-based carbonate precursor is 3-15 $\mu$m;
preferably, a specific surface area of the manganese-based carbonate precursor is 30-80 $m^2/g$;
a tap density of the manganese-based carbonate precursor is 1.6-2.2 $g/cm^3$;
an apparent density of the manganese-based carbonate precursor is 0.7-1.4 $g/cm^3$.

Preferably, the manganese-based carbonate precursor has a complete carbonate crystal structure;

a corresponding position in a XRD diffraction spectrum of the manganese-based carbonate precursor is consistent with a peak position in a XRD diffraction spectrum of a standard manganese carbonate;
in the XRD diffraction spectrum of the manganese-based carbonate precursor, a relative height and a FWHM of (012) peak are $e$ and f, respectively, and a relative height and a FWHM of (104) peak are g and $h$, respectively, then $3.3 \leq g/e \leq 4.4$, $1.0 \leq f/h \leq 1.2$, $3.0 \leq (g*h)/(e*f) \leq 4.0$.

Preferably, the manganese-based carbonate precursor contains an insoluble compound of sodium;

the manganese-based carbonate precursor is prepared by a coprecipitation method;
the manganese-based carbonate precursor is a manganese-based carbonate precursor containing a trace amount of Na element;
the secondary battery includes a lithium-ion secondary battery.

The present invention provides a preparation method of the manganese-based carbonate precursor of a positive electrode material for a secondary battery as described in any one of the foregoing technical solutions, including the following steps:
mixing a nickel source, a manganese source, a cobalt source, a main precipitant, an auxiliary precipitant, and a complexing agent solution to react, and aging and drying, to obtain the manganese-based carbonate precursor.

Preferably, the nickel source includes a nickel salt solution;

the manganese source includes a manganese salt solution;
the cobalt source includes a cobalt salt solution;
the nickel salt includes one or more of nickel sulfate, nickel chloride, and nickel nitrate;
the cobalt salt includes one or more of cobalt sulfate, cobalt chloride, and cobalt nitrate;
the manganese salt includes one or more of manganese sulfate, manganese chloride, and manganese nitrate.

Preferably, the main precipitant includes sodium carbonate and/or sodium bicarbonate;

the auxiliary precipitant includes sodium nitrite and/or sodium hexanitritocobaltate;
a molar ratio of sodium ions in the auxiliary precipitant to sodium ions in the main precipitant is 0.005-0.03;
the complexing agent includes ammonia and/or glycine.

Preferably, a temperature of the reaction is between 50-60°C;

a pH vaue during the reaction is 7.5-8.2;
a mode of the reaction is continuously feeding a raw material into a reaction apparatus for reaction;
a reaction time of the reaction is determined based on a particle diameter of the manganese-based carbonate precursor and/or an amount of an overflowed material during the reaction.

The present invention provides a lithium-rich manganese-based positive electrode material, and the positive electrode material has a chemical formula $Li_{1+a}MO_{2+a}$;

where, $0.25 \leq a \leq 0.4$; $M=Ni_xCo_yNa_zMn_{1-x-y-z}$, and $0.25 \leq x \leq 0.35$, $0 \leq y \leq 0.1$, $0.25 \leq x+y \leq 0.4$, $0.005 \leq z \leq 0.03$; the positive electrode material is a positive electrode material synthesized by the manganese-based carbonate precursor as described in any one of the foregoing technical solutions or by the manganese-based carbonate precursor prepared according to the preparation methods as described in any one of the foregoing technical solutions.

Preferably, in a XRD diffraction spectrum of the positive electrode material, a relative height and a FWHM of (003) peak are *a* and *b,* respectively, and a relative height and a FWHM of (104) peak are c and *d,* respectively, then $1.0 \leq$ *(a/c)* * *(b/d)* $\leq 1.25$;

the positive electrode material is a secondary spherical positive electrode material formed by aggregation of small primary particles;
the small primary particles are a spherical shape and/or a hexagonal sheet shape;
an average particle diameter of the small primary particles is 80-200 nm.

Preferably, D50 particle diameter of the positive electrode material is 6.0-14.0 $\mu$m;

a specific surface area of the positive electrode material is 2.5-6.0 $m^2$/g;
a tap density of the positive electrode material is 1.8-2.6 $g/cm^3$;
an apparent density of the positive electrode material is 0.8-1.4 $g/cm^3$.

The positive electrode material is a lithium-rich manganese-based positive electrode material containing a trace amount of Na element.
The present invention also provides a preparation method of the lithium-rich manganese-based positive electrode material as described in any one of the foregoing technical solutions, including the following steps:
mixing a manganese-based carbonate precursor with a lithium source, and then sintering, to obtain the lithium-rich manganese-based positive electrode material.
Preferably, a heating rate of the sintering is 0.5-10°Cmin;

a sintering mode includes a two-stage sintering;
a temperature of a first stage of the two-stage sintering is 400-700°C;
a time for a second stage of the two-stage sintering is 3-8 h;
a temperature of the second stage of the two-stage sintering is 800-900°C;
a time for the second stage of the two-stage sintering is 10-15 h.

The present invention provides a lithium-ion secondary battery, including a positive electrode sheet, a negative electrode sheet, a separator, and an electrolyte;

where the positive electrode sheet includes a positive electrode active material;
the positive electrode active material includes the lithium-rich manganese-based positive electrode material as described in any one of the foregoing technical solutions, or the lithium-rich manganese-based positive electrode material prepared by the preparation method as described in any one of the foregoing technical solutions.

Preferably, a mass of the positive electrode active material accounts for 90-96% of a total mass of a slurry for preparation of a positive electrode;

a negative electrode active material on the negative electrode sheet includes one or more of metal lithium, graphite, and silicon oxide;
the lithium-ion secondary battery is a lithium-ion secondary battery of the lithium-rich manganese-based positive electrode material containing the trace amount of Na element.

The present invention provides a manganese-based carbonate precursor of a positive electrode material for a secondary battery, the manganese-based carbonate precursor has a chemical formula $Ni_xCo_yNa_zMn_{1-x-y-z}CO_3$; where, $0.25 \leq x \leq 0.35$, $0 \leq y \leq 0.1$, $0.25 \leq x+y \leq 0.4$, $0.005 \leq z \leq 0.03$. Compared with the state of art, the present invention first designs a manganese-based carbonate precursor with a special structure and composition containing a trace amount of uniformly distributed Na element, where a content of Na is in a range of 0.5-3 mol%, which range can ensure that the structural integrity and consistency of carbonate crystals are not affected. Furthermore, the manganese-based carbonate precursor having the trace amount of uniformly distributed Na element inside thereof provided in the present invention has precipitable Na, and by means of simple mixing with the lithium source and sintering, a lithium-rich manganese-based material uniformly doped with Na element can be directly obtained without the need for introducing other Na source, which can effectively avoid uneven doping of Na, improve the doping effect, significantly improve the electrical properties of the material, without significant increase in the production cost. Characterization of XRD characteristics is used to ensure high crystallinity degree and good crystal structure of the primary particles of the manganese-based carbonate precursor.

The present invention also provides a synthesis method of the manganese-based carbonate precursor, including quantitatively adding an auxiliary precipitant according to a designed content of Na for coprecipitation. The method is simple, easy to operate, and has highly controllable result and low cost. Furthermore, the present invention obtains a lithium-rich manganese-based positive electrode material containing a trace amount of Na element, where Na element uniformly occupies part of lithium sites of the material, plays a structural support role, improves a bulk phase lithium ion transport coefficient and a positive lithium phase activity, and reduces a lithium-rich phase activity, stabilizing lattice oxygen, effectively improving a structure stability of long cycling, and suppressing voltage attenuation and gas production. The lithium-rich manganese-based positive electrode material containing the trace amount of Na element provided in the present invention may effectively improve an initial charging-discharging coulombic efficiency, a first-cycle discharge capacity, an average voltage and the energy efficiency of a lithium-rich positive electrode.

## BRIEF DESCRIPTION OF DRAWINGS

FIG. 1 is a comparison diagram of first-cycle charging-discharging curves of positive electrode materials in Example 1 and Comparative Examples 1 and 2 of the present invention.

FIG. 2 is a comparison diagram of first-cycle charging-discharging curves of positive electrode materials in Example 4 and Comparative Example 3 of the present invention.

FIG. 3 is a comparison diagram of first-cycle charging-discharging curves of positive electrode materials in Example 6 and Comparative Example 4 of the present invention.

FIG. 4 is a radial EDS spectrum of Na on a cross-section of a matrix material provided in Example 1 of the present invention.

FIG. 5 is a radial EDS spectrum of Na on a cross-section of a positive electrode material provided in Example 1 of the present invention.

FIG. 6 is a surface distribution EDS spectrum of Na on a cross-section of a matrix material provided in Example 1 of the present invention.

FIG. 7 is a surface distribution EDS spectrum of Na on a cross-section of a positive electrode material provided in Example 1 of the present invention.

FIG. 8 is a XRD spectrum of a positive electrode material provided in Example 1 of the present invention.

FIG. 9 is a XRD spectrum of a positive electrode material provided in Example 4 of the present invention.

FIG. 10 is a XRD spectrum of a positive electrode material provided in Example 6 of the present invention.

FIG. 11 is a XRD spectrum of a positive electrode material provided in Comparative Example 1 of the present invention.

FIG. 12 is a XRD spectrum of a positive electrode material provided in Comparative Example 3 of the present invention.

FIG. 13 is a XRD spectrum of a positive electrode material provided in Comparative Example 4 of the present invention.

## DESCRIPTION OF EMBODIMENTS

To further understand the present invention, the following describes the preferred embodiments of the present invention with reference to the Examples. However, it should be understood that these descriptions are only intended to further describe the features and advantages of the present invention, rather than limiting claims of the present invention .

All raw materials of the present invention are not particularly limited in their sources, and can be purchased on the market or prepared using conventional methods familiar to the skilled in the art.

The purity of all the raw materials in the present invention is not particularly limited, and the invention preferably adopts analytical reagents or conventional purity requirements in the field of preparation of a positive electrode material for a secondary battery.

Brands and abbreviations of all the raw materials of the present invention are conventional brands and abbreviations in this field, and each brand and abbreviation is clear and definite in the related use field, and the skilled in the art can purchase them from the market or prepare them by conventional methods according to the brands, the abbreviations and corresponding uses.

Abbreviations of processes used in the present invention are conventional abbreviations in this field, and specific steps and conventional parameters of the abbreviated processes are clear and definite in the related fields, and the skilled in the art can realize the processes in a conventional way according to the abbreviations.

The present invention provides a manganese-based carbonate precursor of a positive electrode material for a secondary battery, and the manganese-based carbonate precursor has a chemical formula $Ni_xCo_yNa_zMn_{1-x-y-z}CO_3$; where, $0.25 \leq x \leq 0.35$, $0 \leq y \leq 0.1$, $0.25 \leq x+y \leq 0.4$, $0.005 \leq z \leq 0.03$.

In the present invention, the manganese-based carbonate precursor is preferably a secondary spherical precursor formed by aggregation of primary particles.

In the present invention, a shape of the primary particles preferably includes a spherical shape and/or an irregular shape, more preferably a spherical shape or an irregular shape.

In the present invention, an average particle diameter of the primary particles is preferably 50-100 nm, more preferably 60-90 nm, and further preferably 70-80 nm.

In the present invention, D50 particle diameter of the manganese-based carbonate precursor is preferably 3-15 $\mu$m, more preferably 7-13 $\mu$m, and further preferably 9-11 $\mu$m.

In the present invention, a specific surface area of the manganese-based carbonate precursor is preferably 30-80 $m^2/g$, more preferably 40-70 $m^2/g$, and further preferably 50-60 $m^2/g$.

In the present invention, a tap density of the manganese-based carbonate precursor is preferably 1.6-2.2 $g/cm^3$, more preferably 1.7-2.1 $g/cm^3$, and further preferably 1.8-2.0 $g/cm^3$.

In the present invention, an apparent density of the manganese-based carbonate precursor is preferably 0.7-1.4 $g/cm^3$, more preferably 0.8-1.3 $g/cm^3$, further preferably 0.9-1.2 $g/cm^3$, and even further preferably 1.0-1.1 $g/cm^3$.

In the present invention, the manganese-based carbonate precursor preferably has a complete carbonate crystal structure.

In the present invention, a corresponding position in a XRD diffraction spectrum of the manganese-based carbonate precursor is preferably consistent with a peak position in the XRD diffraction spectrum of a standard manganese carbonate.

In the present invention, in the XRD diffraction spectrum of the manganese-based carbonate precursor, a relative height and a FWHM of (012) peak are preferably $e$ and f, respectively, and a relative height and a FWHM of (104) peak are g and $h$, respectively, then $3.3 \leq g/e \leq 4.4$ (or $3.5 \leq g/e \leq 4.3$, or $3.7 \leq g/e \leq 4.1$), $1.0 \leq f/h \leq 1.2$ (or $1.04 \leq f/h \leq 1.16$, or $1.08 \leq f/h \leq 1.12$), $3.0 \leq (g*h)/(e*f) \leq 4.0$ (or $3.2 \leq (g*h)/(e*f) \leq 3.8$, or $3.4 \leq (g*h)/(e*f) \leq 3.6$).

In the present invention, the manganese-based carbonate precursor preferably contains an insoluble compound of sodium.

In the present invention, the manganese-based carbonate precursor is preferably prepared by a coprecipitation method.

In the present invention, the manganese-based carbonate precursor is preferably a manganese-based carbonate precursor containing a trace amount of Na element.

In the present invention, the secondary battery preferably includes a lithium-ion secondary battery.

In the present invention, in order to complete and refine an overall technical solution to ensure that a structure and parameters of the lithium-rich manganese-based positive electrode material may better improve performances of the secondary battery, the manganese-based carbonate precursor containing the trace amount of Na element can specifically have the following composition:

a manganese-based carbonate precursor containing a trace amount of Na element, with a chemical formula of $Ni_xCo_yNa_zMn_{1-x-y-z}CO_3$, where, $0.25 \leq x \leq 0.35$, $0 \leq y \leq 0.1$, $0.25 \leq x+y \leq 0.4$, $0.005 \leq z \leq 0.03$.

Specifically, a peak position of a XRD diffraction spectrum of the manganese-based carbonate precursor is consistent with a peak position of a XRD diffraction spectrum of a standard manganese carbonate, and a relative height and a FWHM of (012) peak are recorded as $e$ and f, respectively, and a relative height and a FWHM of (104) peak are recorded as g and $h$, respectively, satisfying $3.3 \leq g/e \leq 4.4$, $1.0 \leq f/h \leq 1.2$, $3.0 \leq (g*h)/(e*f) \leq 4.0$. The secondary spherical precursor is formed by aggregation of small primary particles, the primary particles are an irregular shape or a sphere-like shape with an average particle diameter of 50-100 nm. A particle diameter of the secondary sphere: $3.0 \mu m \leq D_{50} \leq 15.0 \mu m$, $0.6 \leq (D_{90}-D_{10})/D_{50} \leq 1.5$. the secondary sphere has a specific surface area of 30-80 $m^2/g$, a tap density of $1.6 g/cm^3 \leq TD \leq 2.2 g/cm^3$, and an apparent density of $0.7 g/cm^3 \leq AD \leq 1.4 g/cm^3$.

The manganese-based carbonate precursor provided in the present invention has uniformly distributed of a trace amount of Na element inside thereof, and by means of simply mixing it with a lithium source and sintering, a lithium-rich manganese-based material uniformly doped with Na element can be directly obtained without the need for introducing other Na source, which effectively avoids uneven doping of Na, improves the doping effect, and significantly improves the electrical properties of the material, and having no significant increase in the production cost at the same time. Characterization of XRD is used to ensure the high crystallinity degree and good crystal structure of the primary particle of the manganese-based carbonate precursor. The manganese-based carbonate precursor provided by the present invention has precipible Na.

The present invention provides a preparation method of the manganese-based carbonate precursor of the positive electrode material for a secondary battery as described in any one of the foregoing technical solutions, including the following steps:

mixing a nickel source, a manganese source, a cobalt source, a main precipitant, an auxiliary precipitant, and a complexing agent solution for reaction, and aging and drying, to obtain the manganese-based carbonate precursor.

In the present invention, the nickel source preferably includes a nickel salt solution.

In the present invention, the manganese source preferably includes a manganese salt solution.

In the present invention, the cobalt source preferably includes a cobalt salt solution.

In the present invention, the nickel salt preferably includes one or more of nickel sulfate, nickel chloride, and nickel nitrate, and is more preferably nickel sulfate, nickel chloride, or nickel nitrate.

In the present invention, the cobalt salt preferably includes one or more of cobalt sulfate, cobalt chloride, and cobalt nitrate, and is more preferably cobalt sulfate, cobalt chloride, or cobalt nitrate.

In the present invention, the manganese salt preferably includes one or more of manganese sulfate, manganese chloride, and manganese nitrate, and is more preferably manganese sulfate, manganese chloride, or manganese nitrate.

In the present invention, the main precipitant preferably includes sodium carbonate and/or sodium bicarbonate, and is more preferably sodium carbonate or sodium bicarbonate.

In the present invention, the auxiliary precipitant preferably includes sodium nitrite and/or sodium hexanitritocobaltate, and is more preferably sodium nitrite or sodium hexanitritocobaltate.

In the present invention, a molar ratio of sodium ions in the auxiliary precipitant to sodium ions in the main precipitant is preferably 0.005-0.03, more preferably 0.01-0.025, and further preferably 0.015-0.02.

In the present invention, the complexing agent preferably includes ammonia and/or glycine, and is more preferably ammonia or glycine.

In the present invention, a temperature of the reaction is preferably between 50-60°C, more preferably 52-58°C, and further preferably 54-56°C.

In the present invention, a pH value during the reaction is preferably 7.5-8.2, more preferably 7.6-8.1, more preferably 7.7-8.0, and further preferably 7.8-7.9.

In the present invention, a method of the reaction is preferably continuously feeding a raw material into a reaction apparatus for reaction.

In the present invention, a reaction time is preferably determined based on a particle diameter of the manganese-based carbonate precursor and/or an amount of an overflowed material during the reaction, more preferably based on the particle diameter of the manganese-based carbonate precursor or the amount of the overflowed material during the reaction.

In the present invention, in order to complete and refine an overall technical solution to ensure that structure and parameters of the lithium-rich manganese-based positive electrode material may better improve the performances of the secondary battery. The preparation method of the manganese-based carbonate precursor containing the trace amount of Na element specifically includes the following steps:

a synthesis method of a manganese-based carbonate precursor containing a trace amount of Na element, which is $Ni_xCo_yNa_zMn_{1-x-y-z}CO_3$ ($0.005 \leq z \leq 0.03$):

A salt solution with a total concentration of transition metal ions of 2 mol/L is prepared at a preset ratio by a coprecipitation method, where one or more of nickel sulfate, nickel chloride, and nickel nitrate is used as a nickel source, one or more of cobalt sulfate, cobalt chloride, and cobalt nitrate is used as a cobalt source, one or more of manganese sulfate, manganese chloride and manganese nitrate is used as a manganese source. Sodium carbonate and/or sodium bicarbonate are used as a main precipitant to precipitate the transition metal ions, and one or more of sodium nitrite and sodium hexanitritocobaltate is used as an auxiliary precipitant to precipitate a trace amount of Na ions, where the auxiliary precipitant and the main precipitant satisfy a molar ratio of $0.005 \leq Na_{(auxiliary\ precipitant)} : Na_{(main\ precipitant)} \leq 0.03$. An alkali solution with Na ion concentration of 2 mol/L is formulated, and if sodium hexanitritocobaltate is used as the auxiliary precipitant, an amount of the cobalt salt in the salt solution should be appropriately reduced to ensure a constant ratio of transition metals in the resulting product. A complexing agent solution with a total concentration of 0.01-0.03 mol/L is prepared by using one or more of ammonia or glycine as the complexing agent. Then, the salt solution, the alkali solution, and the complexing agent solution are simultaneously pumped into a reaction kettle at a certain flow rate. A temperature of the reaction kettle is maintained at 50-60°C, a stirring speed is 600-800 rpm, and during the reaction, a pH is maintained at 7.5-8.2. After a particle diameter of the manganese-based carbonate precursor or an amount of an overflowed material reaches a target value, the feeding of the salt solution, the alkali solution, and the complexing agent solution are stopped, and the material in the reactor kettle and the overflowed material are transferred to an aging kettle for aging and then washed with a deionized water with a temperature of 20-50°C by using a suction filtration or centrifugation method. After washing, drying is performed in a drying oven at 120-160°C, to obtain the manganese-based carbonate precursor containing a trace amount of Na element.

In the present invention, a small amount of sodium nitrite or sodium hexanitritocobaltate is used as the auxiliary precipitant, which can react with ammonium ions during coprecipitation process, and synchronously and slowly generate an insoluble compound containing sodium, so that Na is uniformly distributed on an bulk phase and an surface of the manganese-based carbonate precursor, and finally, after mixing and sintering with the lithium source, a Na uniformly doped lithium-rich positive electrode can be formed, where chemical formulas for Na+ precipitation reaction as below:

$$6Na(+)+6NO_2(-)+6Co(2+)+2NH_4(+)=(NH_4)_2Na[Co(NO_2)_6]\downarrow+5Na(+) \ (a)$$

$$2NH_4(+)+3Na(+)+[Co(NO_2)_6](3-)=(NH_4)_2Na[Co(NO_2)_6]\downarrow+2Na(+) \quad (b)$$

$$6xNo_2(-)+6xCo(2+)+(2+2x)NH_4(+)+(3+6x)Na(+)+[Co(NO_2)_6](3-) = (1+x)(NH_4)_2Na[Co(NO_2)_6]\downarrow+(2+5x)Na(+) \qquad (c)$$

Where, the fomula (a) is a reaction chemical formula when sodium nitrite is used as the auxiliary precipitant alone; the fomula (b) is a reaction chemical formula when sodium hexanitritocobaltate is used as the auxiliary precipitant alone; the fomula (c) is a reaction chemical formula when both of them are used as the auxiliary precipitant, where x is a constant, which characterizes a relative content of the two kinds of auxiliary precipitants. An introduction of a trace amount of auxiliary precipitant will not cause a great fluctuation of a coprecipitation reaction environment, which can ensure that the crystallinity of the manganese-based carbonate precursor and morphology of the primary particle are not affected.

The present invention provides a lithium-rich manganese-based positive electrode material, and a chemical formula of the positive electrode material is $Li_{1+a}MO_{2+a}$;

where, $0.25 \leq a \leq 0.4$; $M=Ni_xCo_yNa_zMn_{1-x-y-z}$, and $0.25 \leq x \leq 0.35$, $0 \leq y \leq 0.1$, $0.25 \leq x+y \leq 0.4$, $0.005 \leq z \leq 0.03$; the positive electrode material is a positive electrode material synthesized by the manganese-based carbonate precursor as described in any one of the foregoing technical solutions or the manganese-based carbonate precursor prepared by the preparation method as described in any one of the foregoing technical solutions.

In the present invention, In a XRD diffraction spectrum of the positive electrode material, a relative height and a FWHM of (003) peak are preferably *a* and *b,* respectively, and a relative height and the FWHM of (104) peak are preferably c and d, respectively, then $1.0 \leq$ *(a/c) \* (b/d)* $\leq$ *1.25* (or $1.05 \leq$ *(a/c) \* (b/d)* $\leq 1.20$, or $1.1 \leq$ *(a/c) \* (b/d)* $\leq 1.15$).

In the present invention, the positive electrode material is preferably a secondary spherical positive electrode material formed by aggregation of small primary particles.

In the present invention, the small primary particles are preferably a spherical shape and/or a hexagonal sheet shape, more preferably a spherical shape or a hexagonal sheet shape.

In the present invention, an average particle diameter of the small primary particles is preferably 80-200 nm, more preferably 100-180 nm, and further preferably 120-160 nm.

In the present invention, D50 particle diameter of the positive electrode material is preferably 6.0-14.0 $\mu$m, more 7.0-13.0$\mu$m, further preferably 9.0-12.0 $\mu$m, and even further preferably 10.0-11.0 $\mu$m.

In the present invention, a specific surface area of the positive electrode material is preferably 2.5-6.0 m²/g, more preferably 3.0-5.5 m²/g, further preferably 3.5-5.0 m²/g, and even further preferably 4.0-4.5 m²/g.

In the present invention, a tap density of the positive electrode material is preferably 1.8-2.6 g/cm³, more preferably 1.9-2.5 g/cm³, further preferably 2.0-2.4 g/cm³, and even further preferably 2.1-2.3 g/cm³.

In the present invention, an apparent density of the positive electrode material is preferably 0.8-1.4 g/cm³, more preferably 0.9-1.3 g/cm³, and further preferably 1.0-1.2 g/cm³.

In the present invention, the positive electrode material is a lithium-rich manganese-based positive electrode material containing a trace amount of Na element.

In the present invention, in order to complete and refine an overall technical solution to ensure that structure and parameters of the lithium-rich manganese-based positive electrode material may better improve the performances of the secondary battery. The lithium-rich manganese-based positive electrode material can specifically have the following composition:

a lithium-rich manganese-based positive electrode material synthesized by the manganese-based carbonate precursor, having a chemical formula of $Li_{1+a}MO_{2+a}$, where, $0.25 \leq a \leq 0.4$; $M=Ni_xCo_yNa_zMn_{1-x-y-z}$, where $0.25 \leq x \leq 0.35$, $0 \leq y \leq 0.1$, $0.25 \leq x+y \leq 0.4$, $0.005 \leq z \leq 0.03$.

Specifically, except for superlattice peaks in a $2\theta=20\text{-}25°$ region, main peak positions of the XRD diffraction spectrum of the lithium-rich manganese-based positive electrode material are consistent with those of a standard layered ternary layered $LiNiO_2$. A relative height and a FWHM of (003) peak are recorded as *a, b,* respectively, a relative height and a FWHM of (104) peak are recorded as *c, d,* respectively, satisfying $1.0 \leq (a/c) * (b/d) \leq 1.25$.

Specifically, the lithium-rich manganese-based positive electrode material is a secondary spherical positive electrode material formed by aggregation of small primary particles. The primary particles are a sphere-like shape or a hexagonal sheet shape, and have an average particle diameter of 80-200 nm. The secondary spheres have a particle diameter of: $6.0\ \mu m \leq D_{50} \leq 14.0\ \mu m$, $0.8 \leq (D_{90}\text{-}D_{10})/D_{50} \leq 1.6$, a specific surface area of $2.5\text{-}6.0\ m^2/g$, a tap density of $1.8\ g/cm^3 \leq TD \leq 2.6\ g/cm^3$, and an apparent density of $0.8\ g/cm^3 \leq AD \leq 1.4\ g/cm^3$.

The in-situ doped lithium-rich manganese-based positive electrode described in the present invention can improve the lithium ion transport capacity by uniformly replacing some lithium ions at lithium sites in situ with an appropriate amount of Na ions, and appropriately increasing an interlayer spacing between lithium layers. At the same time, Na ions can play a supporting role, improving the stability of the material structure during a deep deintercalation of lithium ions. In addition, by limiting a molar ratio of Li ions to transition metal ions to 1.25-1.4, a proportion of a lithium-rich phase in the material is slightly lower than a proportion of a ternary layered phase, which may ensure that the positive electrode material has good cycling stability while exerting a high capacity. A restriction of the XRD characterization makes an exposure ratio of (003) and (101) crystal faces of the positive electrode material reasonable, to further balance the capacity utilization and the cycling stability of the positive electrode.

The present invention provides a preparation method of the lithium-rich manganese-based positive electrode material as described in any one of the foregoing technical solutions, including the following steps:
mixing the manganese-based carbonate precursor and a lithium source, and then sintering, to obtain the lithium-rich manganese-based positive electrode material.

In the present invention, a heating rate of the sintering is preferably 0.5-10°Cmin, more preferably 2-8°Cmin, and further preferably 4-6°Cmin.

In the present invention, a sintering mode preferably includes a two-stage sintering.

In the present invention, a temperature of a first stage of the two-stage sintering is preferably 400-700°C, more preferably 450-650°C, and further preferably 500-600°C.

In the present invention, a time for the second stage of the two-stage sintering is preferably 3-8 h, more preferably 4-7 h, and further preferably 5-6 h.

In the present invention, a temperature of a second stage of the two-stage sintering is preferably 800-900°C, more preferably 820-880°C, and further preferably 840-860°C.

In the present invention, a time for the second stage of the two-stage sintering is preferably 10-15 h, more preferably 11-14 h, and further preferably 12-13 h.

In the present invention, in order to complete and refine an overall technical solution to ensure that the structure and parameters of the lithium-rich manganese-based positive electrode material may better improve the performances of the secondary battery, a preparation method of the lithium-rich manganese-based positive electrode material specifically includes the following steps:
a method for synthesizing a lithium-rich positive electrode material by using a manganese-based carbonate precursor containing a trace amount of Na element:
The manganese-based carbonate precursor $Ni_xCo_yNa_zMn_{1-x-y-z}CO_3$ ($0.005 \leq z \leq 0.03$) obtained from the foregoing synthesis method is mixed with a lithium source with a certain stoichiometric ratio thoroughly, where one or more of lithium carbonate, lithium hydroxide, and lithium chloride are used as the lithium source. The mixed material is placed in one of a muffle furnace, a box furnace, a tube furnace, a roller kiln, and a rotary kiln and is sintered using a two-stage heat preservation method under a forced airflow condition, where a temperature of a low-temperature stage is 400-700°C and a holding time thereof is 3-8 h; a temperature of a high-temperature stage is 800-900°C, a holding time thereof is 10-15 h and a heating rate thereof is 0.5-10 °C/min. After sintering and naturally cooling to room temperature, a target lithium-rich positive electrode material is obtained.

In the two-stage sintering method of the present invention, the heat preservation of the low-temperature stage may ensure complete decomposition of the manganese-based carbonate precursor and the lithium salt, allowing the reaction to occur fully, the heat preservation of the high-temperature stage may appropriately improve the crystallinity and stability of the material, and forced airflow can timely discharge $CO_2$ released from decomposition of the carbonate precursor, improving the reaction efficiency and the local reaction consistency.

The present invention provides a lithium-ion secondary battery, including a positive electrode sheet, a negative electrode sheet, a separator, and an electrolyte; where

the positive electrode sheet includes a positive electrode active material;

the positive electrode active material includes the lithium-rich manganese-based positive electrode material as described in any one of the foregoing technical solutions, or the lithium-rich manganese-based positive electrode material prepared by the preparation method as described in any one of the foregoing technical solutions.

In the present invention, a mass of the positive electrode active material preferably accounts for 90-96% of a total mass of a slurry for preparing a positive electrode, more preferably 91-95%, and further preferably 92-94%.

In the present invention, a negative electrode active material on the negative electrode sheet preferably includes one or more of metal lithium, graphite, and silicon oxide, and more preferably metal lithium, graphite, or silicon oxide.

In the present invention, the lithium-ion secondary battery is preferably a lithium-ion secondary battery of a lithium-rich manganese-based positive electrode material containing a trace amount of Na element.

In the lithium-ion secondary battery of using the lithium-rich manganese-based positive electrode material containing the trace amount of Na element as an active material of the positive electrode sheet in the present invention, a battery cell of the lithium-ion secondary battery includes a positive electrode sheet, a negative electrode sheet, a separator, an electrolyte, and a shell. Where, a ratio of a mass of the active material in the positive electrode sheet to a total mass of the slurry of the positive electrode is 90-96%, and the negative electrode active material is one of metallic lithium, graphite and SiO or a combination thereof.

The foregoing steps of the present invention provide a manganese-based carbonate precursor containing a trace amount of Na element and a preparation method thereof, a lithium-rich manganese-based positive electrode material and a preparation method thereof, and a secondary battery. In the manganese-based carbonate precursor with a specific structure and composition containing a trace amount of uniformly distributed Na element as designed in the present a content of Na is in a range of 0.5-3mol%, which range can ensure that the structural integrity and consistency of carbonate crystals are not affected. Furthermore, the manganese-based carbonate precursor having the trace amount of uniformly distributed Na element inside thereof provided in the present invention has precipitable Na, and by means of simple mixing with a lithium source and sintering, the lithium-rich manganese-based material uniformly doped with Na element can be directly obtained without the need for introducing other Na source, which may effectively avoid uneven doping of Na element, improve the doping effect, and significantly improve the electrical properties of the material, without a significant increase in the production cost at the same time, so it is more conducive to the promotion and application of industrialized production. Characterization of XRD is used to ensure the high crystallinity degree and good crystal structure of the primary particles of the manganese-based carbonate precursor.

The present invention also provides a synthesis method for the manganese-based carbonate precursor, including quantitatively adding an auxiliary precipitant according to a designed content of Na to allow coprecipitation. The method is simple and easy to operate, and has a highly controllable result and low cost. Furthermore, the present invention obtains a lithium-rich manganese-based positive electrode material containing a trace amount of Na element, where Na element uniformly occupies some of lithium sites of the material, plays a structural support role, improves a bulk phase lithium ion transport coefficient and a positive lithium phase activity, reduces a lithium-rich phase activity, stabilizing lattice oxygen, effectively improving a structure stability of long cycling, and suppressing voltage attenuation and gas production.

The lithium-rich manganese-based positive electrode material containing the trace amount of Na element provided in the present invention may effectively improve an initial charging-discharging coulombic efficiency, a first-cycle discharge capacity and an average voltage, and the energy efficiency.

To further describe the present invention, the following describes a manganese-based carbonate precursor of a positive electrode material for a secondary battery and a preparation method thereof, a lithium-rich manganese-based positive electrode material and a preparation method thereof, and a lithium-ion secondary battery, as provided by the present invention in detail with reference to examples. However, it should be understood that these examples, which are implemented based on the technical solutions of the present invention, provide detailed implementation methods and specific operation processes, which are only to further describe the features and advantages of the present invention, rather than limiting claims of the present invention, and scope of protection of the present invention is not limited to the following examples.

Example 1

The present example is used to describe preparation of a lithium-rich manganese-based positive electrode material containing a trace amount of Na element and a secondary battery using the positive electrode material as provided in the present invention.

Preparation of $Ni_{0.196}Co_{0.098}Mn_{0.686}Na_{0.02}CO_3$:

A salt solution with a total concentration of transition metal ions of 2 mol/L was prepared at a molar ratio of nickel, cobalt and manganese of 20: 10:70, where nickel sulfate is used as a nickel source, cobalt sulfate is used as a cobalt source, and manganese sulfate is used as a manganese source. An alkali solution with a Na ion concentration of 2 mol/L was prepared using sodium carbonate as a main precipitant and sodium nitrite as an auxiliary precipitant at a molar ratio of $Na_{(auxiliary\ precipitant)}$ : $Na_{(main\ precipitant)}$=0.02. A complexing agent solution with a total concentration of 0.01 mol/L was prepared using ammonia as a complexing agent. Then, the salt solution, the alkali solution and the complexing agent solution were pumped into a reaction kettle at the same time in a flow rate ratio of 1:1.02:1, where a temperature of the reaction kettle is kept at 55°C, a stirring speed is 800 rpm, and a pH is kept at 8.0 during the reaction. After a particle diameter of a precursor was grown to 9.0 $\mu$m and an amount of an overflowed material reached 5 kg, a feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.196}Co_{0.098}Mn_{0.686}Na_{0.02}CO_3$, i.e., a matrix material.

Preparation of $Li_{1.4}Ni_{0.196}Co_{0.098}Mn_{0.686}Na_{0.02}O_{2.4}$:

$Ni_{0.196}Co_{0.098}Mn_{0.686}Na_{0.02}CO_3$ was mixed with lithium carbonate in a molar ratio of 1:1.4 thoroughly. The mixed material was placed in a muffle furnace and sintered using a two-stage heat preservation method under a forced airflow condition, where a temperature of a low-temperature stage is 450°C and a holding time thereof is 5 h; a temperature of a high-temperature stage is 850°C, a holding time thereof is 13 h and a heating rate thereof is 5°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material by the following specific steps: a positive electrode powder was mixed with an conductive agent Super-P and a binder PVDF in a mass ratio of 92:4:4, an appropriate amount of a NMP solution was added to form a slurry, the slurry was coated to an aluminum foil, dried, and then baked in a vacuum oven at 120°C for 12 h. Afterwards, a secondary battery was assembled in a glove box under an Ar atmosphere, where a metallic lithium used as a negative electrode and 1 mol/L of $LiPF_6$ was dissolved in a mixed organic solvent in a volume ratio of EC: EMC=3:7 as an electrolyte, to assemble a button type CR2032 battery. The battery was subjected to a first-cycle charging-discharging test at a voltage window of 2.5-4.55 V at a current density of 50 $mAg^{-1}$ in a constant current charging-discharging mode, then a 200-cycles cycling test at 250 $mAg^{-1}$. The test results are shown in Table 1. Table 1 shows the physical and chemical parameters and electrical performance of each group of samples provided in the examples and comparative examples of the present invention.

Table 1

| Group | Discharge capacity ($mAhg^{-1}$) | Initial efficiency (%) | Capacity retention rate after 200 cycles (%) | Cumulative discharge average voltage attenuation after 200 cycles (mV) |
|---|---|---|---|---|
| Example 1 | 255 | 92.1 | 87.3 | 241 |
| Example 2 | 245 | 90.3 | 86.8 | 253 |
| Example 3 | 250 | 91.1 | 84.2 | 250 |
| Example 4 | 251 | 91.2 | 88.6 | 238 |
| Example 5 | 241 | 90.5 | 92.4 | 231 |
| Example 6 | 234 | 87.9 | 93.7 | 216 |
| Example 7 | 240 | 91.1 | 91.5 | 228 |
| Example 8 | 251 | 90.9 | 88.6 | 246 |
| Example 9 | 249 | 90.7 | 89.2 | 244 |
| Example 10 | 249 | 90.9 | 89.5 | 247 |
| Example 11 | 252 | 91.2 | 87.9 | 233 |
| Example 12 | 244 | 89.6 | 90.9 | 223 |
| Comparative Example 1 | 247 | 89.1 | 84.7 | 282 |
| Comparative Example 2 | 243 | 88.9 | 72.3 | 356 |

(continued)

| Group | Discharge capacity (mAhg⁻¹) | Initial efficiency (%) | Capacity retention rate after 200 cycles (%) | Cumulative discharge average voltage attenuation after 200 cycles (mV) |
|---|---|---|---|---|
| Comparative Example 3 | 241 | 89.05 | 83.5 | 265 |
| Comparative Example 4 | 225 | 85.5 | 86.1 | 242 |

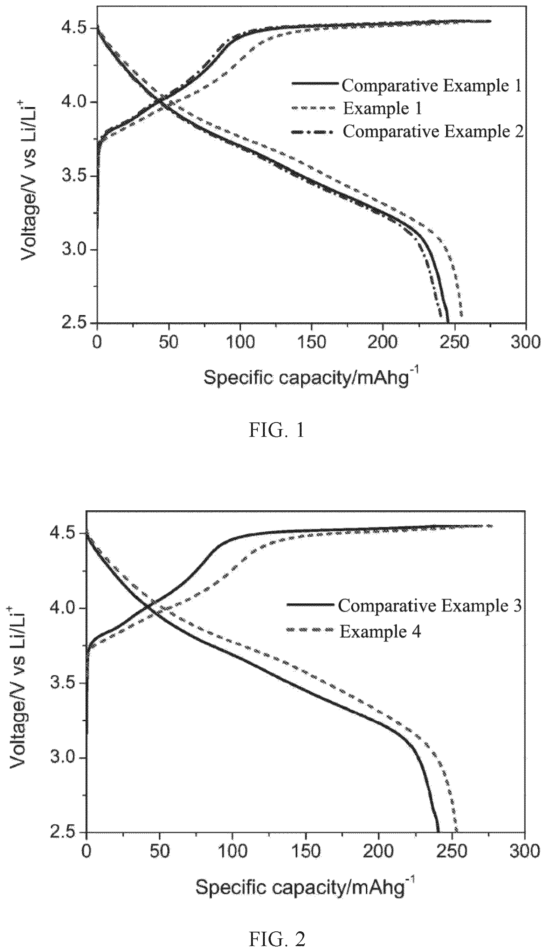

As shown in FIG. 1, FIG. 1 is a comparison diagram of first-cycle charging-discharging curves of the positive electrode materials in Example 1 and Comparative Examples 1 and 2 of the present invention. As can be seen from FIG. 1, the first-cycle coulombic efficiency and energy efficiency of the lithium-rich manganese-based positive electrode material containing the trace amount of Na element prepared by two-stage sintering are significantly improved.

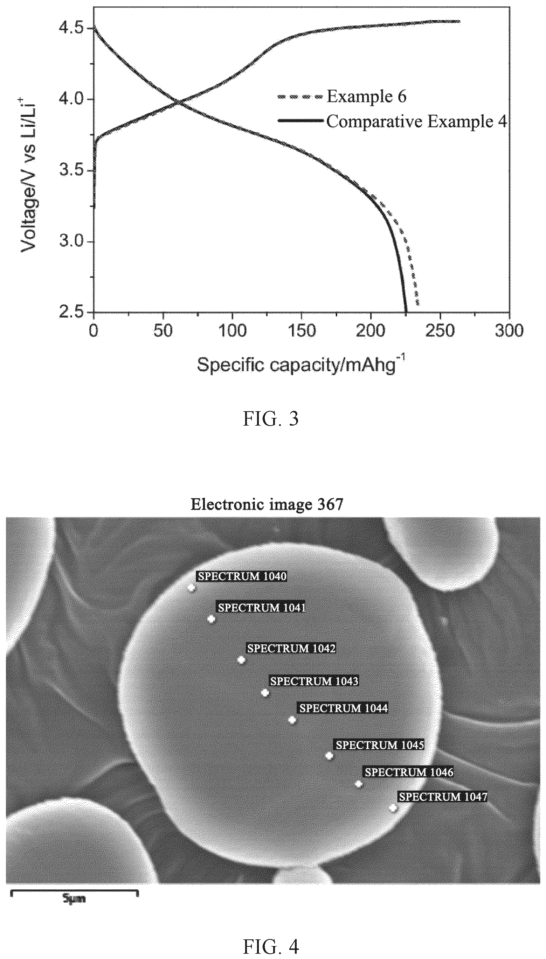

As shown in FIG. 4, FIG. 4 is a radial EDS spectrum of Na on a cross-section of a matrix material provided in Example 1 of the present invention. A point distribution corresponding to FIG. 4 is shown in Table 2. Table 2 shows a point distribution of a radial EDS of Na on the cross-section of the matrix material provided in Example 1 of the present invention.

Table 2

| Spectrum label | Spectrum 1040 | Spectrum 1041 | Spectrum 1042 | Spectrum 1043 | Spectrum 1044 | Spectrum 1045 | Spectrum 1046 | Spectrum 1047 |
|---|---|---|---|---|---|---|---|---|
| Na/wt% | 0.62 | 0.79 | 0.66 | 0.74 | 0.68 | 0.59 | 0.81 | 0.68 |
| Mn/wt% | 68.65 | 68.21 | 69.57 | 70.05 | 69.38 | 68.5 | 68.22 | 69.05 |
| Co/wt% | 9.8 | 10.35 | 10.88 | 9.44 | 10.31 | 10.6 | 9.92 | 10.34 |
| Ni/wt% | 20.93 | 20.65 | 18.89 | 19.77 | 19.63 | 20.31 | 21.05 | 19.93 |
| Total amount/wt % | 100.00 | 100.00 | 100.00 | 100.00 | 100.00 | 100.00 | 100.00 | 100.00 |

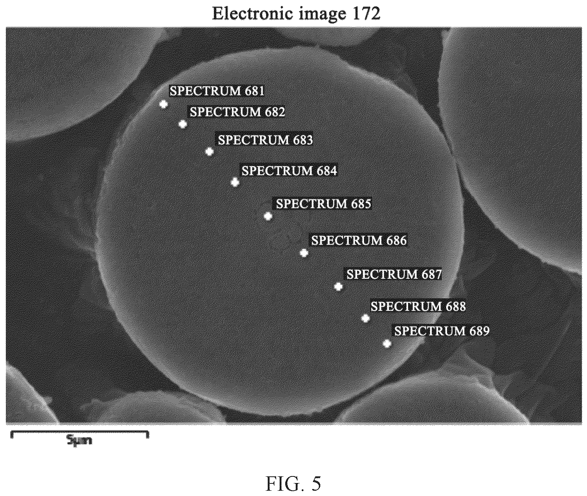

As shown in FIG. 5, FIG. 5 is a radial EDS spectrum of Na on a cross-section of a positive electrode material provided in Example 1 of the present invention. A point distribution corresponding to FIG. 5 is shown in Table 3. Table 3 shows a point distribution of a radial EDS of Na on the cross-section of the positive electrode material provided in Example 1 of the present invention.

Table 3

| Spectrum label | Spectrum 681 | Spectrum 682 | Spectrum 683 | Spectrum 684 | Spectrum 685 | Spectrum 686 | Spectrum 687 | Spectrum 688 | Spectrum 689 |
|---|---|---|---|---|---|---|---|---|---|
| Na/wt% | 0.77 | 0.85 | 0.68 | 0.83 | 0.74 | 0.89 | 0.76 | 0.79 | 0.81 |
| Mn/wt% | 68.06 | 68.35 | 68.83 | 69.00 | 69.35 | 68.72 | 68.67 | 69.09 | 68.19 |
| Co/wt% | 10.3 | 10.14 | 9.54 | 9.62 | 9.53 | 9.83 | 10.11 | 9.86 | 9.79 |
| Ni/wt% | 20.87 | 20.66 | 20.95 | 20.55 | 20.38 | 20.56 | 20.46 | 20.26 | 21.21 |
| Total amount/wt % | 100.00 | 100.00 | 100.00 | 100.00 | 100.00 | 100.00 | 100.00 | 100.00 | 100.00 |

As can be seen from the radial EDS spectrum of Na on the cross-section of the matrix material of the present example and the point distribution thereof as shown in FIG. 4 and Table 2, and from the radial EDS spectrum of Na on the cross-section of the positive electrode material of the present example and the point distribution thereof as shown in FIG. 5 and Table 3, Na exists in a bulk phase of the material including both the matrix material and the positive electrode material and is uniformly distributed. Moreover, a proportion of Na element in a core area and an edge area of a positive electrode secondary sphere is basically unchanged compared with the matrix, indicating that there is no obvious segregation and enrichment of Na element in the sintering process, thereby ensuring the uniform doping effect for the bulk phase.

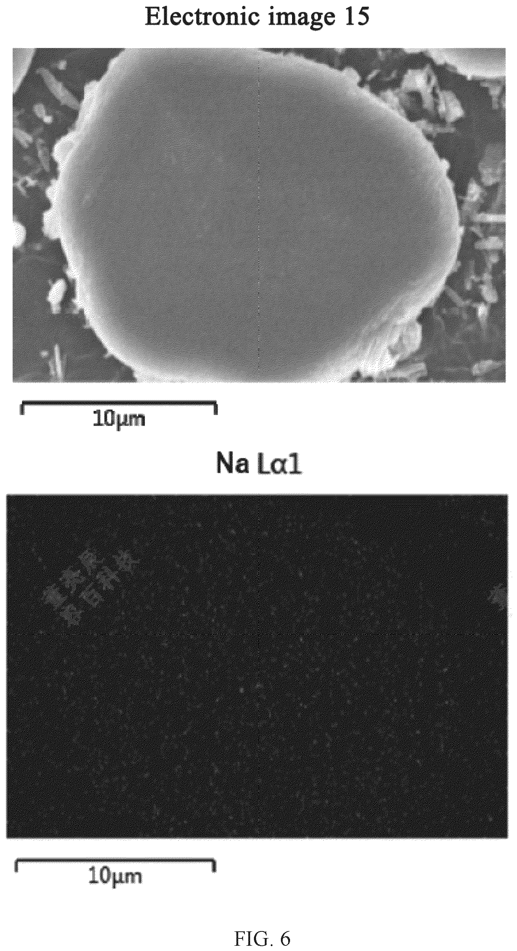

As shown in FIG. 6, FIG. 6 is a surface distribution EDS spectrum of Na on a cross-section of the matrix material provided in Example 1 of the present invention.

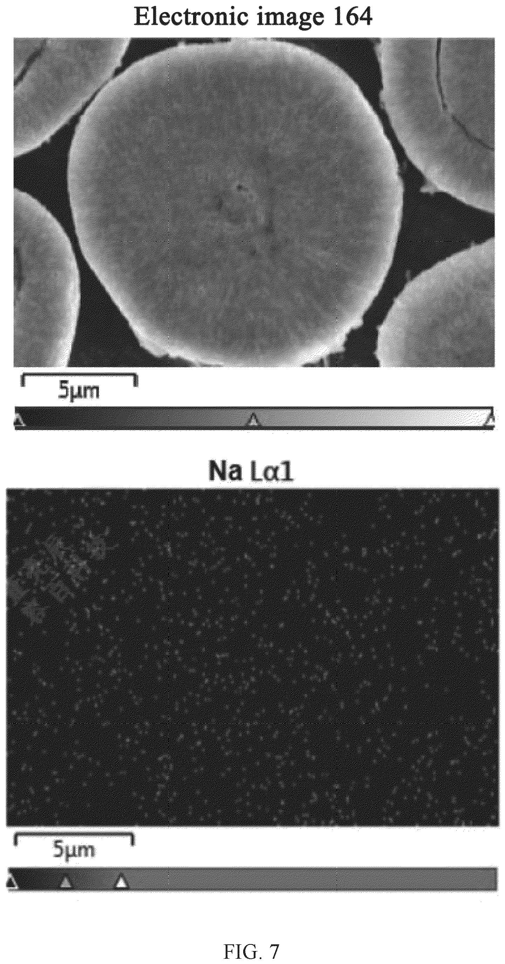

As shown in FIG.7, FIG. 7 is a surface distribution EDS spectrum of Na on a cross-section of the positive electrode material provided in Example 1 of the present invention.

FIGS.6 and 7 further show that Na exists uniformly in the bulk phase of the matrix material and the positive electrode material, and there is no tendency of enrichment and uneven distribution of Na element in the sintering process.

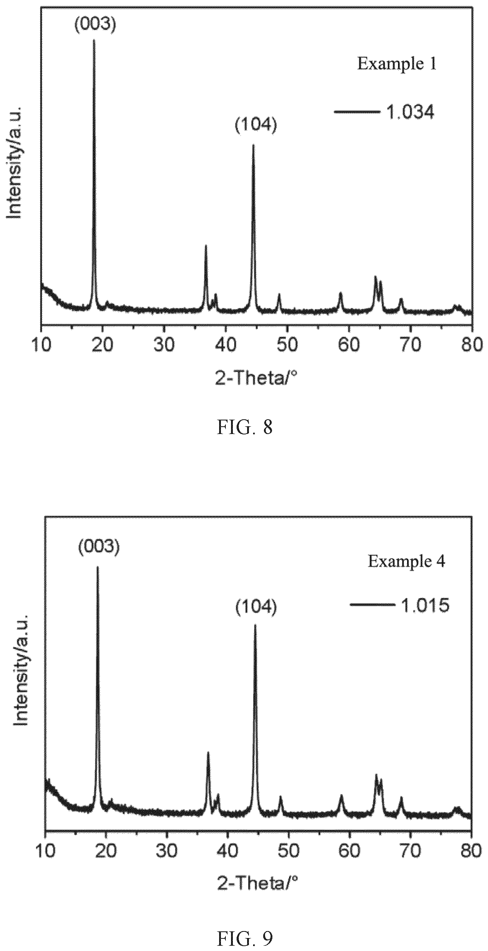

As shown in FIG. 8, FIG. 8 is a XRD spectrum of the positive electrode material provided in Example 1 of the present invention.

Example 2

The present example is used to describe preparation of a lithium-rich manganese-based positive electrode material containing a trace amount of Na element and a secondary battery using the positive electrode material as provided in the present invention.

Preparation of $Ni_{0.199}Co_{0.0995}Mn_{0.6965}Na_{0.005}CO_3$:

A salt solution with a total concentration of transition metal ions of 2 mol/L was prepared at a molar ratio of nickel, cobalt and manganese of 20:10:70, where nickel sulfate is used as a nickel source, cobalt sulfate is used as a cobalt source, and manganese sulfate is used as a manganese source. An alkali solution with a Na ion concentration of 2 mol/L was prepared using sodium carbonate as a main precipitant and sodium nitrite as an auxiliary precipitant at a molar ratio of $Na_{(auxiliary\ precipitant)} : Na_{(main\ precipitant)}=0.005$. A complexing agent solution with a total concentration of 0.01 mol/L was prepared using ammonia as a complexing agent. Then, the salt solution, the alkali solution and the complexing agent solution were pumped into a reaction kettle at the same time in a flow rate ratio of 1:1.005:1, where a temperature of the reaction kettle is kept at 55°C, a stirring speed is 800 rpm, and a pH is kept at 8.0 during the reaction. After a particle diameter of a precursor was grown to 9.0 μm and an amount of an overflowed material reached 5 kg, feeding of the salt solution, the alkali solution and the complexing agent solution was stopped, and the matrix in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.199}Co_{0.0995}Mn_{0.6965}Na_{0.005}CO_3$.

Preparation of $Li_{1.4}Ni_{0.199}Co_{0.0995}Mn_{0.6965}Na_{0.005}O_{2.4}$:

$Ni_{0.199}Co_{0.0995}Mn_{0.6965}Na_{0.005}CO_3$ was mixed with lithium carbonate in a molar ratio of 1:1.4 thoroughly. The mixed material was placed in a muffle furnace and sintered using a two-stage heat preservation method under a forced airflow condition, where a temperature of a low-temperature stage is 450°C and a holding time thereof is 5 h; a temperature of a high-temperature stage is 850°C, a holding time thereof is 13 h and a heating rate thereof is 5°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

Example 3

The present example is used to describe preparation of a lithium-rich manganese-based positive electrode material containing a trace amount of Na element and a secondary battery using the positive electrode material as provided in the present invention.

Preparation of $Ni_{0.194}Co_{0.097}Mn_{0.679}Na_{0.03}CO_3$:

A salt solution with a total concentration of transition metal ions of 2 mol/L was prepared at a molar ratio of nickel, cobalt and manganese of 20:10:70, where nickel sulfate is used as a nickel source, cobalt sulfate is used as a cobalt source, and manganese sulfate is used as a manganese source. An alkali solution with a Na ion concentration of 2 mol/L was prepared using sodium carbonate as a main precipitant and sodium nitrite as an auxiliary precipitant at a molar ratio of $Na_{(auxiliary\ precipitant)}$ : $Na_{(main\ precipitant)}$=0.03. A complexing agent solution with a total concentration of 0.01 mol/L was prepared using ammonia as a complexing agent. Then, the salt solution, the alkali solution and the complexing agent solution were pumped into a reaction kettle at the same time in a flow rate ratio of 1:1.03:1, where a temperature of the reaction kettle is kept at 55°C, a stirring speed is 800 rpm, and a pH is kept at 8.0 during the reaction. After a particle diameter of a precursor was grown to 9.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.194}Co_{0.097}Mn_{0.679}Na_{0.03}CO_3$.

Preparation of $Li_{1.4}Ni_{0.194}Co_{0.097}Mn_{0.679}Na_{0.03}O_{2.4}$:

$Ni_{0.194}Co_{0.097}Mn_{0.679}Na_{0.03}CO_3$ was mixed with lithium carbonate in a molar ratio of 1:1.4 thoroughly. The mixed material was placed in a muffle furnace and sintered using a two-stage heat preservation method under a forced airflow condition, where a temperature of a low-temperature stage is 450°C and a holding time thereof is 5 h; a temperature of a high-temperature stage is 850°C, a holding time thereof is 13 h and a heating rate thereof is 5°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

Example 4

The present example is used to describe preparation of a lithium-rich manganese-based positive electrode material containing a trace amount of Na element and a secondary battery using the positive electrode material, as provided in the present invention.

Preparation of $Ni_{0.245}Mn_{0.735}Na_{0.02}CO_3$:

A salt solution with a total concentration of transition metal ions of 2 mol/L was prepared at a molar ratio of nickel to manganese of 25:75, where nickel sulfate is used as a nickel source, cobalt sulfate is used as a cobalt source, and manganese sulfate is used as a manganese source. An alkali solution with a Na ion concentration of 2 mol/L was prepared using sodium carbonate as a main precipitant and sodium nitrite as an auxiliary precipitant at a molar ratio of $Na_{(auxiliary\ precipitant)}$ : $Na_{(main\ precipitant)}$=0.02. A complexing agent solution with a total concentration of 0.02 mol/L was prepared using ammonia as a complexing agent. Then, the salt solution, the alkali solution and the complexing agent solution were pumped into a reaction kettle at the same time in a flow rate ratio of 1:1.02:1, where a temperature of the reaction kettle is kept at 60°C, a stirring speed is 700 rpm, and a pH is kept at 8.1 during the reaction. After a particle diameter of a precursor was grown to 7.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.245}Mn_{0.735}Na_{0.02}CO_3$.

Preparation of $Li_{1.4}Ni_{0.245}Mn_{0.735}Na_{0.02}O_{2.4}$:

$Ni_{0.245}Mn_{0.735}Na_{0.02}CO_3$ was mixed with lithium carbonate in a molar ratio of 1:1.4 thoroughly. The mixed material was placed in a muffle furnace and sintered using a two-stage heat preservation method under a forced airflow condition, where a temperature of a low-temperature stage is 500°C and a holding time thereof is 4 h; a temperature of a high-temperature stage is 830°C, a holding time thereof is 15 h and a heating rate thereof is 2°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

As shown in FIG. 2, FIG. 2 is a comparison diagram of first-cycle charging-discharging curves of positive electrode materials in Example 4 and Comparative Example 3 of the present invention. As can be seen from FIG. 2, the first-cycle coulombic efficiency, energy efficiency, discharge capacity and discharge voltage of the lithium-rich manganese-based positive electrode material containing a trace amount of Na element are significantly improved compared with a Na-free lithium-rich manganese-based positive electrode material.

As shown in FIG. 9, FIG. 9 is a XRD spectrum of a positive electrode material provided in Example 4 of the present invention.

Example 5

The present example is used to describe preparation of a lithium-rich manganese-based positive electrode material containing a trace amount of Na element and a secondary battery using the positive electrode material, as provided in the present invention.

Preparation of $Ni_{0.288}Co_{0.02}Mn_{0.672}Na_{0.02}CO_3$:

A salt solution with a total concentration of transition metal ions of 2 mol/L was prepared at a molar ratio of nickel to manganese of 30:70, where nickel sulfate is used as a nickel source, cobalt sulfate is used as a cobalt source, and manganese sulfate is used as a manganese source. An alkali solution with a Na ion concentration of 2 mol/L was prepared using sodium bicarbonate as a main precipitant and sodium hexanitritocobaltate as an auxiliary precipitant at a molar ratio of $Na_{(auxiliary\ precipitant)} : Na_{(main\ precipitant)}=0.02$. A complexing agent solution with a total concentration of 0.03 mol/L was prepared using glycine as a complexing agent. Then, the salt solution, the alkali solution and the complexing agent solution were pumped into a reaction kettle at the same time in a flow rate ratio of 1:1.02:1, where a temperature of the reaction kettle is kept at 50°C, a stirring speed is 800 rpm, and a pH is kept at 7.8 during the reaction. After a particle diameter of a precursor was grown to 9.5 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 140°C, to obtain a manganese-based carbonate precursor containing a trace amount of Na element, $Ni_{0.288}Co_{0.02}Mn_{0.672}Na_{0.02}CO_3$.

Preparation of $Li_{1.35}Ni_{0.288}Co_{0.02}Mn_{0.672}Na_{0.02}O_{2.35}$:

$Ni_{0.288}Co_{0.02}Mn_{0.672}Na_{0.02}CO_3$ was mixed with lithium carbonate in a molar ratio of 1: 1.35 thoroughly. The mixed material was placed in a box furnace and sintered using a two-stage heat preservation method under a forced airflow condition, where a temperature of a low-temperature stage is 500°C and a holding time thereof is 4 h; a temperature of a high-temperature stage is 860°C, a holding time thereof is 12 h and a heating rate thereof is 4°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

Example 6

The present example is used to describe preparation of a lithium-rich manganese-based positive electrode material containing a trace amount of Na element and a secondary battery using the positive electrode material as provided in the present invention.

Preparation of $Ni_{0.336}Co_{0.02}Mn_{0.624}Na_{0.02}CO_3$:

A salt solution with a total concentration of transition metal ions of 2 mol/L was prepared at a molar ratio of nickel to manganese of 35:65, where nickel sulfate is used as a nickel source, cobalt sulfate is used as a cobalt source, and manganese sulfate is used as a manganese source. An alkali solution with a Na ion concentration of 2 mol/L was prepared using sodium bicarbonate as a main precipitant and sodium hexanitritocobaltate as an auxiliary precipitant at a molar ratio of $Na_{(auxiliary\ precipitant)} : Na_{(main\ precipitant)} = 0.02$. A complexing agent solution with a total concentration of 0.02 mol/L was prepared using glycine as a complexing agent. Then, the salt solution, the alkali solution and the complexing agent solution were pumped into a reaction kettle at the same time in a flow rate ratio of 1:1.02:1, where a temperature of the reaction kettle is kept at 50°C, a stirring speed is 800 rpm, and a pH is kept at 7.9 during the reaction. After a particle diameter of a precursor was grown to 12.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 140°C, to obtain a manganese-based carbonate precursor containing a trace amount of Na element, $Ni_{0.336}Co_{0.02}Mn_{0.624}Na_{0.02}CO_3$.

Preparation of $Li_{1.3}Ni_{0.336}Co_{0.02}Mn_{0.624}Na_{0.02}O_{2.3}$:

$Ni_{0.336}Co_{0.02}Mn_{0.624}Na_{0.02}CO_3$ was mixed with lithium carbonate in a molar ratio of 1:1.3 thoroughly. The mixed material was placed in a tube furnace and sintered using a two-stage heat preservation method under a forced airflow condition, where a temperature of a low-temperature stage is 500°C and a holding time thereof is 4 h; a temperature of a high-temperature stage is 870°C, a holding time thereof is 10 h and a heating rate thereof is 2°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

As shown in FIG. 3, FIG. 3 is a comparison diagram of first-cycle charging-discharging curves of positive electrode materials in Example 6 and Comparative Example 4 of the present invention. As can be seen from FIG. 3, the first-cycle coulombic efficiency, energy efficiency and discharge capacity of the lithium-rich manganese-based positive electrode material containing the trace amount of Na element are significantly improved compared with a Na-free lithium-rich manganese-based positive electrode material.

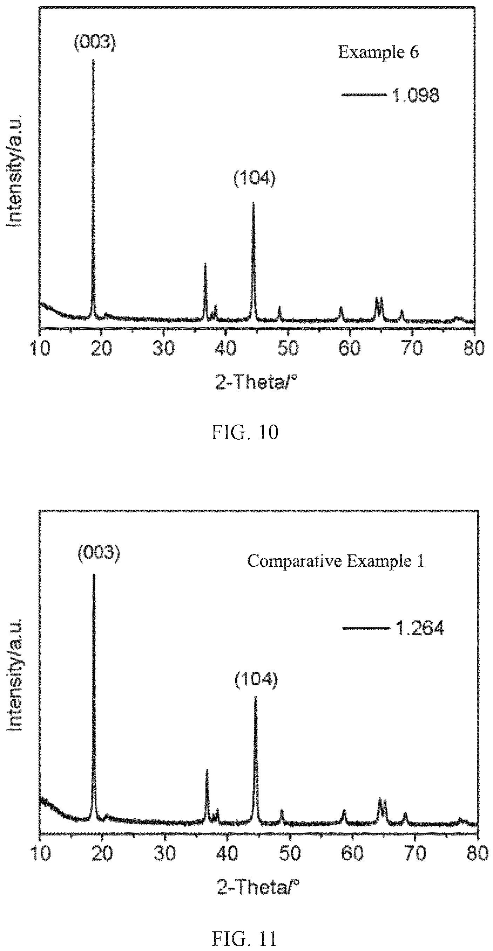

As shown in FIG.10, FIG. 10 is a XRD spectrum of a positive electrode material provided in Example 6 of the present invention.

Example 7

The present example is used to describe preparation of a lithium-rich manganese-based positive electrode material containing a trace amount of Na element and a secondary battery using the positive electrode material, as provided in the present invention.

Preparation of $Ni_{0.294}Co_{0.049}Mn_{0.637}Na_{0.02}CO_3$:

A salt solution with a total concentration of transition metal ions of 2 mol/L was prepared at a molar ratio of nickel to manganese of 35:5:65, where nickel chloride is used as a nickel source, cobalt chloride is used as a cobalt source, and manganese chloride is used as a manganese source. An alkali solution with a Na ion concentration of 2 mol/L was prepared using sodium bicarbonate as a main precipitant and sodium nitrite as an auxiliary precipitant at a molar ratio of $Na_{(auxiliary\ precipitant)} : Na_{(main\ precipitant)} = 0.02$. A complexing agent solution with a total concentration of 0.01 mol/L was prepared using ammonia as a complexing agent. Then, the salt solution, the alkali solution and the complexing agent solution were pumped into a reaction kettle at the same time in a flow rate ratio of 1:1.02:1, where a temperature of the reaction kettle is kept at 50°C, a stirring speed is 600 rpm, and a pH is kept at 7.8 during the reaction. After a particle diameter of a precursor was grown to 7.5 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.294}Co_{0.049}Mn_{0.637}Na_{0.02}CO_3$.

Preparation of $Li_{1.34}Ni_{0.294}Co_{0.049}Mn_{0.637}Na_{0.02}O_{2.34}$:

$Ni_{0.294}Co_{0.049}Mn_{0.637}Na_{0.02}CO_3$ was mixed with lithium carbonate in a molar ratio of 1: 1.34 thoroughly. The mixed material was placed in a roller kiln and sintered using a two-stage heat preservation method under a forced airflow condition, where a temperature of a low-temperature stage is 530°C and a holding time thereof is 3 h; a temperature of a high-temperature stage is 840°C, a holding time thereof is 14 h and a heating rate thereof is 2°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

Example 8

The present example is used to describe preparation of a lithium-rich manganese-based positive electrode material containing a trace amount of Na element and a secondary battery using the positive electrode material as provided in the present invention.

Preparation of $Ni_{0.245}Co_{0.049}Mn_{0.686}Na_{0.02}CO_3$:

A salt solution with a total concentration of transition metal ions of 2 mol/L was prepared at a molar ratio of nickel to manganese of 25:5:70, where nickel nitrate is used as a nickel source, cobalt nitrate is used as a cobalt source, and manganese nitrate is used as a manganese source. An alkali solution with a Na ion concentration of 2 mol/L was prepared using sodium bicarbonate as a main precipitant and sodium nitrite as an auxiliary precipitant at a molar ratio of $Na_{(auxiliary\ precipitant)} : Na_{(main\ precipitant)}=0.02$. A complexing agent solution with a total concentration of 0.01 mol/L was prepared using ammonia as a complexing agent. Then, the salt solution, the alkali solution and the complexing agent solution were pumped into a reaction kettle at the same time in a flow rate ratio of 1:1.02:1, where a temperature of the reaction kettle is kept at 50°C, a stirring speed is 600 rpm, and a pH is kept at 7.8 during the reaction. After a particle diameter of a precursor was grown to 9.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.245}Co_{0.049}Mn_{0.686}Na_{0.02}CO_3$.

Preparation of $Li_{1.38}Ni_{0.245}Co_{0.049}Mn_{0.686}Na_{0.02}O_{2.38}$:

$Ni_{0.245}Co_{0.049}Mn_{0.686}Na_{0.02}CO_3$ was mixed with lithium hydroxide in a molar ratio of 1:1.38 thoroughly. The mixed material was placed in a roller kiln and sintered using a two-stage heat preservation method under a forced airflow condition, where a temperature of a low-temperature stage is 500°C and a holding time thereof is 3 h; a temperature of a high-temperature stage is 830°C, a holding time thereof is 13 h and a heating rate thereof is 2°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

Example 9

The present example is used to describe preparation of a lithium-rich manganese-based positive electrode material containing a trace amount of Na element and a secondary battery using the positive electrode material as provided in the present invention.

Preparation of $Ni_{0.245}Co_{0.049}Mn_{0.686}Na_{0.02}CO_3$:

A salt solution with a total concentration of transition metal ions of 2 mol/L was prepared at a molar ratio of nickel to manganese of 25:5:70, where nickel nitrate is used as a nickel source, cobalt nitrate is used as a cobalt source, and manganese nitrate is used as a manganese source. An alkali solution with a Na ion concentration of 2 mol/L was prepared using sodium bicarbonate and sodium carbonate mixed in a molar ratio of 1:1 as a main precipitant, and sodium nitrite as an auxiliary precipitant at a molar ratio of $Na_{(auxiliary\ precipitant)} : Na_{(main\ precipitant)}=0.02$. A complexing agent solution with a total concentration of 0.01 mol/L was prepared using glycine as a complexing agent. Then, the salt solution, the alkali solution and the complexing agent solution were pumped into a reaction kettle at the same time in a flow rate ratio of 1:1.02:1, where a temperature of the reaction kettle is kept at 50°C, a stirring speed is 600 rpm, and a pH is kept at 7.8 during the reaction. After a particle diameter of a precursor was grown to 9.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.245}Co_{0.049}Mn_{0.686}Na_{0.02}CO_3$.

Preparation of $Li_{1.38}Ni_{0.245}Co_{0.049}Mn_{0.686}Na_{0.02}O_{2.38}$:

$Ni_{0.245}Co_{0.049}Mn_{0.686}Na_{0.02}CO_3$ was mixed with lithium hydroxide in a molar ratio of 1:1.38 thoroughly. The mixed material was placed in a roller kiln and sintered using a two-stage heat preservation method under a forced airflow condition, where a temperature of a low-temperature stage is 500°C and a holding time thereof is 3 h; a temperature of a high-temperature stage is 850°C, a holding time thereof is 12 h and a heating rate thereof is 2°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

Example 10

The present example is used to describe preparation of a lithium-rich manganese-based positive electrode material containing a trace amount of Na element and a secondary battery using the positive electrode material as provided in the present invention.

Preparation of $Ni_{0.245}Co_{0.049}Mn_{0.686}Na_{0.02}CO_3$:

A salt solution with a total concentration of transition metal ions of 2 mol/L was prepared at a molar ratio of nickel to manganese of 25:5:70, where nickel nitrate is used as a nickel source, cobalt nitrate is used as a cobalt source, and manganese nitrate is used as a manganese source. An alkali solution with a Na ion concentration of 2 mol/L was prepared using sodium bicarbonate and sodium carbonate mixed in a molar ratio of 1:1 as a main precipitant, and sodium nitrite as an auxiliary precipitant at a molar ratio of $Na_{(auxiliary\ precipitant)} : Na_{(main\ precipitant)}=0.02$. A complexing agent solution with a total concentration of 0.01 mol/L was prepared using ammonia and glycine mixed in a molar ratio of 1:1 as a complexing agent. Then, the salt solution, the alkali solution and the complexing agent solution were pumped into a reaction kettle at the same time in a flow rate ratio of 1:1.02:1, where a temperature of the reaction kettle is kept at 50°C, a stirring speed is 600 rpm, and a pH is kept at 7.8 during the reaction. After a particle diameter of a precursor was grown to 9.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.245}Co_{0.049}Mn_{0.686}Na_{0.02}CO_3$.

Preparation of $Li_{1.38}Ni_{0.245}Co_{0.049}Mn_{0.686}Na_{0.02}O_{2.38}$:

$Ni_{0.245}Co_{0.049}Mn_{0.686}Na_{0.02}CO_3$ was mixed with lithium hydroxide in a molar ratio of 1:1.38 thoroughly. The mixed material was placed in a roller kiln and sintered using a two-stage heat preservation method under a forced airflow condition, where a temperature of a low-temperature stage is 500°C and a holding time thereof is 3 h; a temperature of a high-temperature stage is 830°C, a holding time thereof is 13 h and a heating rate thereof is 2°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

Example 11

The present example is used to describe preparation of a lithium-rich manganese-based positive electrode material containing a trace amount of Na element and a secondary battery using the positive electrode material as provided in the present invention.

Preparation of $Ni_{0.24125}Co_{0.005}Mn_{0.72375}Na_{0.03}CO_3$:

A salt solution with a total concentration of transition metal ions of 2 mol/L was prepared at a molar ratio of nickel to manganese of 25:75, where nickel nitrate is used as a nickel source, cobalt nitrate is used as a cobalt source, and manganese nitrate is used as a manganese source. An alkali solution with a Na ion concentration of 2 mol/L was prepared using sodium bicarbonate and sodium carbonate mixed in a molar ratio of 1:1 as a main precipitant, and using sodium hexanitritocobaltate and sodium nitrite mixed in a molar ratio of 1:3 as an auxiliary precipitant at a molar ratio of $Na_{(auxiliary\ precipitant)} : Na_{(main\ precipitant)}=0.03$. A complexing agent solution with a total concentration of 0.02 mol/L was prepared using ammonia and glycine mixed in a molar ratio of 1:1 as a complexing agent. Then, the salt solution, the alkali solution and the complexing agent solution were pumped into a reaction kettle at the same time in a flow rate ratio of 1:1.02:1, where a temperature of the reaction kettle is kept at 50°C, a stirring speed is 600 rpm, and a pH is kept at 7.8 during the reaction. After a particle diameter of a precursor was grown to 9.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.24125}Co_{0.005}Mn_{0.72375}Na_{0.03}CO_3$.

Preparation of $Li_{1.4}Ni_{0.24125}Co_{0.005}Mn_{0.72375}Na_{0.03}O_{2.4}$:

$Ni_{0.24125}Co_{0.005}Mn_{0.72375}Na_{0.03}CO_3$ was mixed with lithium hydroxide in a molar ratio of 1:1.38 thoroughly. The mixed material was placed in a roller kiln and sintered using a two-stage heat preservation method under a forced airflow condition, where a temperature of a low-temperature stage is 500°C and a holding time thereof is 4 h; a temperature of a high-temperature stage is 840°C, a holding time thereof is 13 h and a heating rate thereof is 2°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

Example 12

The present example is used to describe preparation of a lithium-rich manganese-based positive electrode material containing a trace amount of Na element and a secondary battery using the positive electrode material as provided in the present invention.

Preparation of $Ni_{0.3168}Mn_{0.6732}Na_{0.01}CO_3$:

A salt solution with a total concentration of transition metal ions of 2 mol/L was prepared at a molar ratio of nickel to manganese of 32:68, where nickel nitrate is used as a nickel source, cobalt nitrate is used as a cobalt source, and manganese nitrate is used as a manganese source. An alkali solution with a Na ion concentration of 2 mol/L was prepared using sodium bicarbonate and sodium carbonate mixed in a molar ratio of 1:1 as a main precipitant, and sodium nitrite as an auxiliary precipitant at a molar ratio of $Na_{(auxiliary\ precipitant)} : Na_{(main\ precipitant)}=0.01$. A complexing agent solution with a total concentration of 0.02 mol/L was prepared using ammonia and glycine mixed in a molar ratio of 1:1 as a complexing agent. Then, the salt solution, the alkali solution and the complexing agent solution were pumped into a reaction kettle at the same time in a flow rate ratio of 1:1.01:1, where a temperature of the reaction kettle is kept at 50°C, a stirring speed is 600 rpm, and a pH is kept at 7.8 during the reaction. After a particle diameter of a precursor was grown to 9.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.3168}Mn_{0.6732}Na_{0.01}CO_3$.

Preparation of $Li_{1.37}Ni_{0.3168}Mn_{0.6732}Na_{0.01}O_{2.37}$:

$Ni_{0.3168}Mn_{0.6732}Na_{0.01}CO_3$ was mixed with lithium hydroxide in a molar ratio of 1: 1.37 thoroughly. The mixed material was placed in a roller kiln and sintered using a two-stage heat preservation method under a forced airflow condition, where a temperature of a low-temperature stage is 500°C and a holding time thereof is 4 h; a temperature of a high-temperature stage is 855°C, a holding time thereof is 13 h and a heating rate thereof is 2°C/min. After sintering and naturally cooling to room temperature, a lithium-rich manganese-based positive electrode material was obtained.

A secondary battery was prepared by using the lithium-rich manganese-based positive electrode material containing a trace amount of Na element prepared in the present example as a positive electrode active material, and the electrical performance of the secondary battery was tested with the same specific steps as Example 1. The test results are shown in Table 1.

Comparative Example 1

The present comparative example is used to describe preparation of a lithium-rich manganese-based positive electrode material without a trace amount of Na element and a secondary battery using the positive electrode material.

Preparation of $Ni_{0.2}Co_{0.1}Mn_{0.7}CO_3$:

A salt solution with a total concentration of transition metal ions of 2 mol/L was prepared at a molar ratio of nickel, cobalt and manganese of 20:10:70, where nickel sulfate is used as a nickel source, cobalt sulfate is used as a cobalt source, and manganese sulfate is used as a manganese source. An alkali solution with a Na ion concentration of 2 mol/L was prepared using sodium carbonate as a precipitant. A complexing agent solution with a total concentration of 0.01 mol/L was prepared using ammonia as a complexing agent. Then, the salt solution, the alkali solution and the complexing agent solution were pumped into a reaction kettle at the same time in a flow rate ratio of 1:1:1, where a temperature of the reaction kettle is kept at 55°C, a stirring speed is 800 rpm, and a pH is kept at 8.0 during the reaction. After a particle diameter of a precursor was grown to 9.0 μm and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, obtaining a manganese-based carbonate precursor without a trace amount of Na element, $Ni_{0.2}Co_{0.1}Mn_{0.7}CO_3$.

Preparation of $Li_{1.4}Ni_{0.2}Co_{0.1}Mn_{0.7}O_{2.4}$:

$Ni_{0.2}Co_{0.1}Mn_{0.7}CO_3$ was mixed with lithium carbonate in a molar ratio of 1:1.4 thoroughly. The mixed material was placed in a muffle furnace and sintered using a two-stage heat preservation method under a forced airflow condition, where a temperature of a low-temperature stage is 450°C and a holding time thereof is 5 h; a temperature of a high-temperature stage is 850°C, a holding time thereof is 13 h and a heating rate thereof is 5°C/min. After sintering and naturally cooling to room temperature, a lithium-rich manganese-based positive electrode material was obtained.
As shown in FIG. 11, FIG. 11 is a XRD spectrum of a positive electrode material provided in Comparative Example 1 of the present invention.
A secondary battery was prepared by using the lithium-rich manganese-based positive electrode material prepared in the present comparative example as a positive electrode active material, and the electrical performance of the secondary battery was tested with the same specific steps as Example 1. The test results are shown in Table 1.

Comparative Example 2

The present comparative example is used to describe a preparation of a manganese-based positive electrode containing a trace amount of Na element by single stage heat preservation sintering and a secondary battery using the positive electrode material.

Preparation of $Ni_{0.199}Co_{0.0995}Mn_{0.6965}Na_{0.005}CO_3$:

A salt solution with a total concentration of transition metal ions of 2 mol/L was prepared at a molar ratio of nickel, cobalt and manganese of 20:10:70, where nickel sulfate is used as a nickel source, cobalt sulfate is used as a cobalt source, and manganese sulfate is used as a manganese source. An alkali solution with a Na ion concentration of 2 mol/L was prepared using sodium carbonate as a main precipitant and sodium nitrite as an auxiliary precipitant at a molar ratio of Na(auxiliary precipitant) : Na(main precipitant)=0.005. A complexing agent solution with a total concentration of 0.01 mol/L was prepared using ammonia as a complexing agent. Then, the salt solution, the alkali solution and the complexing agent solution were pumped into a reaction kettle at the same time in a flow rate ratio of 1:1.005:1, where a temperature of the reaction kettle is kept at 55°C, a stirring speed is 800 rpm, and a pH is kept at 8.0 during the reaction. After a particle diameter of a precursor was grown to 9.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor containing a trace amount of Na element, $Ni_{0.199}Co_{0.0995}Mn_{0.6965}Na_{0.005}CO_3$.

Preparation of $Li_{1.4}Ni_{0.199}Co_{0.0995}Mn_{0.6965}Na_{0.005}O_{2.4}$:

$Ni_{0.199}Co_{0.0995}Mn_{0.6965}Na_{0.005}CO_3$ was mixed with lithium carbonate in a molar ratio of 1:1.4 thoroughly. The mixed material was placed in a muffle furnace and sintered heating up to 850°C at 5°C/min under a forced airflow condition, with a holding time of 13 h at this temperature. After sintering and naturally cooling to room temperature, a lithium-rich manganese-based positive electrode material was obtained.

A secondary battery was prepared by using the lithium-rich manganese-based positive electrode material prepared in the present comparative example as a positive electrode active material, and the electrical performance of the secondary battery was tested with the same specific steps as Example 1. The test results are shown in Table 1.

Comparative Example 3

The present comparative example is used to describe preparation of a lithium-rich manganese-based positive electrode material without a trace amount of Na element and a secondary battery using the positive electrode material.

Preparation of $Ni_{0.25}Mn_{0.75}CO_3$:

A salt solution with a total concentration of transition metal ions of 2 mol/L was prepared at a molar ratio of nickel to manganese of 25:75, where nickel sulfate is used as a nickel source, cobalt sulfate is used as a cobalt source, and manganese sulfate is used as a manganese source. An alkali solution with a Na ion concentration of 2 mol/L was prepared using sodium carbonate as a precipitant. A complexing agent solution with a total concentration of 0.02 mol/L was prepared using ammonia as a complexing agent. Then, the salt solution, the alkali solution and the complexing agent solution were pumped into a reaction kettle at the same time in a flow rate ratio of 1:1:1, where a temperature of the reaction kettle is kept at 60°C, a stirring speed is 700 rpm, and a pH is kept at 8.1 during the reaction. After a particle diameter of a precursor was grown to 7.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 120°C, to obtain a manganese-based carbonate precursor without a trace amount of Na element, $Ni_{0.25}Mn_{0.75}CO_3$.

Preparation of $Li_{1.4}Ni_{0.25}Mn_{0.75}O_{2.4}$:

$Ni_{0.25}Mn_{0.75}CO_3$ was mixed with lithium carbonate in a molar ratio of 1:1.4 thoroughly. The mixed material was placed in a muffle furnace and sintered using a two-stage heat preservation method under a forced airflow condition, where a temperature of a low-temperature stage is 500°C and a holding time thereof is 4 h; a temperature of a high-temperature stage is 830°C, a holding time thereof is 15 h and a heating rate thereof is 2°C/min. After sintering and naturally cooling to room temperature, a lithium-rich manganese-based positive electrode material was obtained.

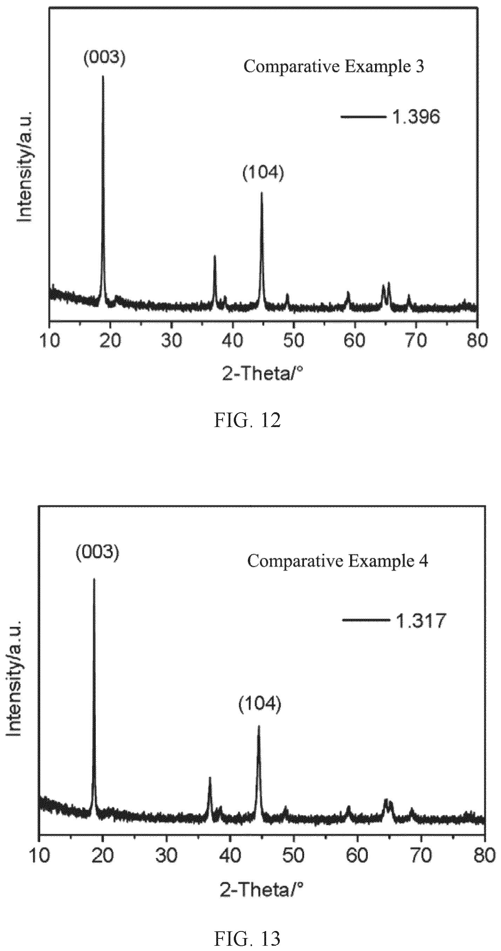

As shown in FIG. 12, FIG. 12 is a XRD spectrum of a positive electrode material provided in Comparative Example 3 of the present invention.

A secondary battery was prepared by using the lithium-rich manganese-based positive electrode material with a trace amount of Na element prepared in the present example as a positive electrode active material, and its electrical performance was tested with the same specific steps as Example 1. The test results are shown in Table 1.

Comparative Example 4

The present comparative example is used to describe a preparation of a manganese-based positive electrode without a trace amount of Na element and a secondary battery using the positive electrode material.

Preparation of $Ni_{0.35}Mn_{0.65}CO_3$:

A salt solution with a total concentration of transition metal ions of 2 mol/L was prepared at a molar ratio of nickel to manganese of 35:65, where nickel sulfate is used as a nickel source, cobalt sulfate is used as a cobalt source, and manganese sulfate is used as a manganese source. An alkali solution with a Na ion concentration of 2 mol/L was prepared using sodium bicarbonate as a precipitant. A complexing agent solution with a total concentration of 0.02 mol/L was prepared using glycine as a complexing agent. Then, the salt solution, the alkali solution and the complexing agent solution were pumped into a reaction kettle at the same time in a flow rate ratio of 1:1:1, where a temperature of the reaction kettle is kept at 50°C, a stirring speed is 800 rpm, and a pH is kept at 7.9 during the reaction. After a particle diameter of a precursor was grown to 12.0 $\mu$m and an amount of an overflowed material reached 5 kg, feeding of the salt solution, the alkali solution and the complexing agent solution was stopped, and the material in the reactor kettle and the overflowed material were transferred to an aging kettle for aging. Afterwards, deionized water was used for washing via suction filtration at atmospheric temperature. After washing was completed, drying was performed in a drying oven at 140°C, to obtain a manganese-based carbonate precursor with a trace amount of Na element, which is $Ni_{0.35}Mn_{0.65}CO_3$.

Preparation of $Li_{1.3}Ni_{0.35}Mn_{0.65}O_{2.3}$:

$Ni_{0.35}Mn_{0.65}CO_3$ was mixed with lithium carbonate in a molar ratio of 1:1.3 thoroughly. The mixed material was placed in a tube furnace and sintered heating up to 870°C at 2°C/min under a forced airflow condition, with a holding time of 10 h at this temperature. After sintering and naturally cooling to room temperature, a lithium-rich positive electrode material was obtained.

As shown in FIG. 13, FIG. 13 is a XRD spectrum of a positive electrode provided in Comparative Example 4 of the present invention.

A secondary battery was prepared by using the lithium-rich manganese-based positive electrode material prepared in the present comparative example as a positive electrode active material, and its electrical performance was tested with the same specific steps as Example 1. The test results are shown in Table 1.

As shown in Table 4, Table 4 shows main XRD parameters of samples provided by the examples and comparative examples of the present application.

Table 4

| Group \\ Parameter | a (relative value) | b (absolute value) | c (relative value) | d (absolute value) | $(a/c) * (b/d)$ |
|---|---|---|---|---|---|
| Example 1 | 1.000 | 0.210 | 0.587 | 0.346 | 1.034 |
| Example 4 | 1.000 | 0.301 | 0.762 | 0.389 | 1.015 |
| Example 6 | 1.000 | 0.144 | 0.437 | 0.200 | 1.098 |
| Comparative Example 1 | 1.000 | 0.213 | 0.487 | 0.346 | 1.264 |
| Comparative Example 3 | 1.000 | 0.215 | 0.471 | 0.327 | 1.396 |
| Comparative Example 4 | 1.000 | 0.172 | 0.334 | 0.391 | 1.317 |

The values of $(a/c) * (b/d)$ can be calculated from Table 4. It can be seen that the values of $(a/c) * (b/d)$ of the positive electrodes in Examples 1, 4, and 6 are all less than 1.25, and the values of $(a/c) * (b/d)$ of the comparative examples are all higher than 1.25.

The foregoing provides a detailed introduction of a manganese-based carbonate precursor containing a trace amount Na element, a lithium-rich manganese-based positive electrode material, and a secondary battery as provided by the present invention. Specific examples are applied in the present text to explain the principles and embodiments of the present invention. The foregoing examples are only used to help understanding the methods and core ideas of the present invention, including the best embodiments, and also enable any skilled in the art to practice the present invention, including manufacturing and using any apparatus or system, and implementing any combined method. It should be noted that for ordinary skilled in the art, without departing from the principle of the present invention, improvements and modifications can be made to the present invention, and these improvements and modifications also fall within the scope of protection of the claims of the present invention. The scope of protection of the present invention is defined by the claims and may include other embodiments that can be thought of by the skilled in the art. If these other embodiments have structural elements that are not different from the textual expression of the claims, or if they include equivalent structural elements that are not substantially different from the textual expression of the claims, then these other embodiments should also be included within the scope of the claims.

**Claims**

1. A manganese-based carbonate precursor of a positive electrode material for a secondary battery, wherein the manganese-based carbonate precursor has a chemical formula $Ni_xCo_yNa_zMn_{1-x-y-z}CO_3$;
   wherein $0.25 \leq x \leq 0.35$, $0 \leq y \leq 0.1$, $0.25 \leq x+y \leq 0.4$, $0.005 \leq z \leq 0.03$.

2. The manganese-based carbonate precursor according to claim 1, wherein the manganese-based carbonate precursor is a secondary spherical precursor formed by aggregation of primary particles;

   a shape of the primary particles comprises a spherical shape and/or an irregular shape; and
   an average particle diameter of the primary particles is 50-100 nm.

3. The manganese-based carbonate precursor according to claim 1, wherein D50 particle diameter of the manganese-based carbonate precursor is 3-15 $\mu$m;

   a specific surface area of the manganese-based carbonate precursor is 30-80 $m^2/g$;
   a tap density of the manganese-based carbonate precursor is 1.6-2.2 $g/cm^3$; and
   an apparent density of the manganese-based carbonate precursor is 0.7-1.4 $g/cm^3$.

4. The manganese-based carbonate precursor according to claim 1, wherein the manganese-based carbonate precursor has a complete carbonate crystal structure;

   a corresponding position in a XRD diffraction spectrum of the manganese-based carbonate precursor is consistent with a peak position in a XRD diffraction spectrum of a standard manganese carbonate; and
   in the XRD diffraction spectrum of the manganese-based carbonate precursor, a relative height and a FWHM of (012) peak are $e$ and f, respectively, and a relative height and a FWHM of (104) peak are g and $h$, respectively, then $3.3 \leq g/e \leq 4.4$, $1.0 \leq f/h \leq 1.2$, $3.0 \leq (g*h)/(e*f) \leq 4.0$.

5. The manganese-based carbonate precursor according to claim 1, wherein the manganese-based carbonate precursor contains an insoluble compound of sodium;

   the manganese-based carbonate precursor is prepared by a coprecipitation method;
   the manganese-based carbonate precursor is a manganese-based carbonate precursor containing a trace amount of Na element; and
   the secondary battery comprises a lithium-ion secondary battery.

6. A preparation method of the manganese-based carbonate precursor of a positive electrode material for a secondary battery according to any one of claims 1-5, comprising the following steps:

   mixing a nickel source, a manganese source, a cobalt source, a main precipitant, an auxiliary precipitant, and a complexing agent solution for reaction, and then aging and drying, to obtain the manganese-based carbonate precursor.

7. The preparation method according to claim 6, wherein the nickel source comprises a nickel salt solution;

   the manganese source comprises a manganese salt solution;
   the cobalt source comprises a cobalt salt solution;
   the nickel salt comprises one or more of nickel sulfate, nickel chloride, and nickel nitrate;
   the cobalt salt comprises one or more of cobalt sulfate, cobalt chloride, and cobalt nitrate; and
   the manganese salt comprises one or more of manganese sulfate, manganese chloride, and manganese nitrate.

8. The preparation method according to claim 6, wherein the main precipitant comprises sodium carbonate and/or sodium bicarbonate;

the auxiliary precipitant comprises sodium nitrite and/or sodium hexanitritocobaltate;
a molar ratio of sodium ions in the auxiliary precipitant to sodium ions in the main precipitant is 0.005-0.03; and
the complexing agent comprises ammonia and/or glycine.

9. The preparation method according to claim 6, wherein a temperature of the reaction is between 50-60°C;

a pH value during the reaction is 7.5-8.2;
a mode of the reaction is continuously feeding a raw material into a reaction apparatus for reaction;
a reaction time of the reaction is determined based on a particle diameter of the manganese-based carbonate precursor and/or an amount of an overflowed material during the reaction.

10. A lithium-rich manganese-based positive electrode material, wherein the positive electrode material has a chemical formula $Li_{1+a}MO_{2+a}$;

wherein $0.25 \leq a \leq 0.4$; $M = Ni_xCo_yNa_zMn_{1-x-y-z}$, and

$$0.25 \leq x \leq 0.35,\ 0 \leq y \leq 0.1,\ 0.25 \leq x+y \leq 0.4,\ 0.005 \leq z \leq 0.03;$$

the positive electrode material is a positive electrode material synthesized by the manganese-based carbonate precursor according to any one of claims 1-5 or the manganese-based carbonate precursor prepared by the preparation methods according to any one of claims 6-9.

11. The positive electrode material according to claim 10, wherein in a XRD diffraction spectrum of the positive electrode material, a relative height and a FWHM of (003) peak are *a* and *b*, respectively, and a relative height and a FWHM of (104) peak are c and *d*, respectively, then $1.0 \leq$ *(a/c) * (b/d)* $\leq 1.25$;

the positive electrode material is a secondary spherical positive electrode material formed by aggregation of small primary particles;
the small primary particles are a spherical shape and/or a hexagonal sheet shape; and
an average particle diameter of the small primary particles is 80-200 nm.

12. The positive electrode material according to claim 10, wherein D50 particle diameter of the positive electrode material is 6.0-14.0 $\mu$m;

a specific surface area of the positive electrode material is 2.5-6.0 $m^2/g$;
a tap density of the positive electrode material is 1.8-2.6 $g/cm^3$;
an apparent density of the positive electrode material is 0.8-1.4 $g/cm^3$; and
the positive electrode material is a lithium-rich manganese-based positive electrode material containing a trace amount of Na element.

13. A preparation method of the lithium-rich manganese-based positive electrode material according to any one of claims 10-12, comprising the following steps:
mixing the manganese-based carbonate precursor with a lithium source, and then sintering, to obtain the lithium-rich manganese-based positive electrode material.

14. The preparation method according to claim 13, wherein a heating rate of the sintering is 0.5-10°Cmin;

a sintering mode comprises a two-stage sintering;
a temperature of a first stage of the two-stage sintering is 400-700°C;
a time for the second stage of the two-stage sintering is 3-8 h;
a temperature of a second stage of the two-stage sintering is 800-900°C; and
a time for the second stage of the two-stage sintering is 10-15 h.

15. A lithium-ion secondary battery, comprising a positive electrode sheet, a negative electrode sheet, a separator, and an electrolyte;

the positive electrode sheet comprises a positive electrode active material;
the positive electrode active material comprises the lithium-rich manganese-based positive electrode material according to any one of claims 10-12, or a lithium-rich manganese-based positive electrode material prepared by the preparation method according to any one of claims 13-14.

16. The lithium-ion secondary battery according to claim 15, wherein a mass of the positive electrode active material accounts for 90-96% of a total mass of a slurry for preparing a positive electrode;

a negative electrode active material on the negative electrode sheet comprises one or more of metal lithium, graphite, and silicon oxide; and
the lithium-ion secondary battery is a lithium-ion secondary battery of a lithium-rich manganese-based positive electrode material containing a trace amount of Na element.

FIG. 1

FIG. 2

FIG. 3

Electronic image 367

FIG. 4

Electronic image 172

FIG. 5

## Electronic image 15

10μm

## Na Lα1

10μm

FIG. 6

## Electronic image 164

5μm

## Na Lα1

5μm

FIG. 7

FIG. 8

FIG. 9

FIG. 10

FIG. 11

FIG. 12

FIG. 13

## INTERNATIONAL SEARCH REPORT

| | International application No. |
|---|---|
| | **PCT/CN2023/077787** |

**A.    CLASSIFICATION OF SUBJECT MATTER**

C01G 53/00(2006.01)i; H01M 4/525(2010.01)i; H01M 4/505(2010.01)i; H01M 4/04(2006.01)i; B82Y 30/00(2011.01)i; B82Y 40/00(2011.01)i; H01M 10/0525(2010.01)i; H01M 4/62(2006.01)i

According to International Patent Classification (IPC) or to both national classification and IPC

**B.    FIELDS SEARCHED**

Minimum documentation searched (classification system followed by classification symbols)

IPC: C01G 53/-, H01M 4/-, B82Y 30/-, B82Y40/-, H01M 10/-

Documentation searched other than minimum documentation to the extent that such documents are included in the fields searched

Electronic data base consulted during the international search (name of data base and, where practicable, search terms used)

CNABS, CNTXT, VEN, CNKI, WEB OF SCIENCE: 碳酸盐, 前驱体, 锰, 硫酸锰, 氯化锰, 硝酸锰, 镍, 硫酸镍, 氯化镍, 硝酸镍, 钴, 硫酸钴, 氯化钴, 硝酸钴, 钠, 碳酸钠, 碳酸氢钠, 共沉淀, 电池, 电极, 亚硝酸钠, 六硝基合钴酸钠, 氨水, 甘氨酸, carbonate, precursor, manganese, manganese nitrate, manganese chloride, manganese sulfate, nickel, nickel chloride, nickel sulfate, nickel nitrate, cobalt, cobalt sulfate, cobalt chloride, cobalt nitrate, sodium, sodium carbonate, sodium bicarbonate, co-precipitate, battery, electrodes, sodium nitrite, sodium hexazitrocobaltate, ammonia, glycine

**C.    DOCUMENTS CONSIDERED TO BE RELEVANT**

| Category* | Citation of document, with indication, where appropriate, of the relevant passages | Relevant to claim No. |
|---|---|---|
| PX | CN 114933337 A (NINGBO RONBAY NEW ENERGY TECHNOLOGY CO., LTD.) 23 August 2022 (2022-08-23)<br>      claims 1-16 | 1-16 |
| X | CN 103441265 A (SHANGHAI INSTITUTE OF SPACE POWER-SOURCES) 11 December 2013 (2013-12-11)<br>      description, paragraphs [0009], [0026] and [0032], and figure 1 | 1-16 |
| A | CN 111554920 A (JIANGXI FAR EAST BATTERY CO., LTD.) 18 August 2020 (2020-08-18)<br>      entire document | 1-16 |
| A | US 2015380720 A1 (KOREA INSTITUTE OF INDUSTRIAL TECHNOLOGY) 31 December 2015 (2015-12-31)<br>      entire document | 1-16 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 June 2023** | **10 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| | INTERNATIONAL SEARCH REPORT | International application No. |
|---|---|---|
| | | **PCT/CN2023/077787** |

**C. DOCUMENTS CONSIDERED TO BE RELEVANT**

| Category* | Citation of document, with indication, where appropriate, of the relevant passages | Relevant to claim No. |
|---|---|---|
| A | CN 111170377 A (KUNMING UNIVERSITY OF SCIENCE AND TECHNOLOGY et al.) 19 May 2020 (2020-05-19) entire document | 1-16 |

Form PCT/ISA/210 (second sheet) (July 2022)

INTERNATIONAL SEARCH REPORT

Information on patent family members

International application No.

**PCT/CN2023/077787**

| Patent document cited in search report | | | Publication date (day/month/year) | Patent family member(s) | | | Publication date (day/month/year) |
|---|---|---|---|---|---|---|---|
| CN | 114933337 | A | 23 August 2022 | None | | | |
| CN | 103441265 | A | 11 December 2013 | None | | | |
| CN | 111554920 | A | 18 August 2020 | None | | | |
| US | 2015380720 | A1 | 31 December 2015 | WO | 2014126312 | A1 | 21 August 2014 |
| | | | | JP | 2016509348 | A | 24 March 2016 |
| | | | | JP | 6257650 | B2 | 10 January 2018 |
| | | | | US | 10020488 | B2 | 10 July 2018 |
| | | | | KR | 20140101915 | A | 21 August 2014 |
| | | | | KR | 101501823 | B1 | 12 March 2015 |
| CN | 111170377 | A | 19 May 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210759671
- CN 113540458
- CN 113782748

**Non-patent literature cited in the description**

- *ACS Appl.Mater.Interfaces*, 2019, vol. 11, 37842-37849
- *J. Mater.Chem.A*, 2013, vol. 1, 11397-11403
- *ACS Appl.Energy Mater.*, 2020, vol. 3 (9), 8953-8959
- *Electrochimica Acta*, 2017, vol. 253, 31-38
- *RSC Adv.*, 2015, vol. 5, 93048-93056
- *Int J Energy Res.*, 2019, 2-11
- *Electrochimica Acta*, 2020, vol. 349, 136402
- *ACS Appl.Energy Mater.*, 2018, vol. 1, 4065-4074
- *RSC Adv.*, 2016, vol. 6, 57310
- *Nano Energy*, 2021, vol. 81, 105622
- *Journal of Alloys and Compounds*, 2022, vol. 895, 162613
- *ACS Sustainable Chem. Eng.*, 2021, vol. 9, 197-206
- *Nanotechnology*, 2022, vol. 33, 065705
- *J. Mater. Chem. A*, 2016